# EUROPÄISCHE PATENTSCHRIFT

(11) **EP 3 215 931 B1**
(45) Veröffentlichungstag und Bekanntmachung des Hinweises auf die Patenterteilung: **26.09.2018**
(21) Anmeldenummer: 15813693.7
(22) Anmeldetag: 06.11.2015
(51) Int. Cl.: G06F 7/53, H04L 9/00

(54) **VORRICHTUNG UND VERFAHREN ZUR MULTIPLIKATION ZUR ERSCHWERUNG VON SEITENKANALANGRIFFEN**
DEVICE AND METHOD FOR MULTIPLICATION FOR IMPEDING SIDE-CHANNEL ATTACKS
DISPOSITIF ET PROCÉDÉ DE MULTIPLICATION POUR RENDRE LES ATTAQUES DE CANAUX LATÉRAUX PLUS DIFFICILES

(30) Priorität: 07.11.2014 DE 102014222825
(43) Veröffentlichungstag der Anmeldung: 13.09.2017
(73) Patentinhaber: IHP GmbH-Innovations for High Performance Microelectronics / Leibniz-Institut für innovative Mikroelektronik, 15236 Frankfurt / Oder (DE)
(72) Erfinder: DYKA, Zoya, 15230 Frankfurt (Oder) (DE); LANGENDÖRFER, Peter, 15234 Frankfurt (Oder) (DE)
(74) Vertreter: Eisenführ Speiser
(86) Internationale Anmeldenummer: PCT/EP2015/075993
(87) Internationale Veröffentlichungsnummer: WO 2016/071523

(56) Entgegenhaltungen:
- DE-A1-102007 007 699
- US-B2- 8 457 919
- ZOYA DYKA ET AL: "Proposing Individualization of the design of cryptographic hardware accelerators as countermeasure against structure and side channel analysis", INTERNATIONAL ASSOCIATION FOR CRYPTOLOGIC RESEARCH,, Bd. 20150319:144001, 19. März 2015 (2015-03-19), Seiten 1-4, XP061017967, [gefunden am 2015-03-19]

## Beschreibung

Die vorliegende Erfindung betrifft Vorrichtungen und Verfahren zur Multiplikation zweier Faktoren.

DE 10 2007 007 699 A1 zeigt eine Kryptographievorrichtung, welche Seitenkanalinformation reduziert. Die Kryptographievorrichtung weist einen ersten Rechenblock auf, der ausgebildet ist, empfangene erste Eingangsdaten entweder zu verschlüsseln oder zu entschlüsseln und die verschlüsselten bzw. entschlüsselten ersten Eingangsdaten als erste Ausgangsdaten an einem ersten Datenausgang auszugeben, und einen zweiten Rechenblock, der ausgebildet ist, empfangene zweite Eingangsdaten entweder zu verschlüsseln oder zu entschlüsseln und die verschlüsselten bzw. entschlüsselten zweiten Eingangsdaten als zweite Ausgangsdaten an einem zweiten Datenausgang auszugeben, und eine Steuereinheit, welche mit dem ersten und dem zweiten Rechenblock verbunden ist und die ausgebildet ist, in einem ersten Betriebszustand die ersten Ausgangsdaten zum einen dem ersten Rechenblock teilweise oder vollständig als die ersten Eingangsdaten zuzuweisen und zum anderen entweder teilweise oder vollständig dem zweiten Rechen block als Teil der zweiten Eingangsdaten zuzuweisen.

Ein Anwendungsfeld der vorliegenden Erfindung ist die Verschleierung von Seitenkanal-Lecks (engl. side channel leakage) kryptographischer Chips, Drahtlose Netzwerke wie beispielsweise Sensornetze sind eine relativ neue Technologie, die es trotzdem bereits geschafft hat, eine wirtschaftliche Relevanz zu erlangen. Im Bereich der Automatisierungstechnik wird der Einsatz drahtloser Systeme und auch drahtloser Sensornetze in den kommenden Jahren an Bedeutung gewinnen und zu einem Wettbewerbsvorteil führen, wenn die Anbieter sichere drahtlose Systeme anbieten können.

Ein wesentlicher Aspekt der Sicherheit liegt im Bereich des Schutzes kritischer Infrastrukturen. Auch hier werden verstärkt drahtlose Systeme eingesetzt.

Der Einsatz drahtloser Systeme führt zu folgenden Änderungen im Hinblick auf die Garantierung von IT-Sicherheit:
1. Jedes drahtlose Gerät kann nicht nur über die Netzverbindung sondern auch direkt nach der Beschaffung physikalisch angegriffen werden. Standard-Sicherheitslösungen, die aus der Festnetz-Kommunikation stammen, wo alle Angriffe über die Verbindung zum Internet quasi kanalisiert werden, sind nicht mehr ausreichend.
2. Drahtlose Geräte sind nicht immer erreichbar. Wenn die drahtlose Verbindung schlecht ist oder wenn die Geräte in einem Energiesparmodus sind, können Pausen in der Erreichbarkeit entstehen, die von wenigen Sekunden bis zu Minuten oder Stunden dauern können. Da sich die Sichtbarkeit der drahtlosen Geräte verändert, kann ein Angreifer diese auch für den rechtmäßigen Besitzer unbemerkt stehlen und in seinem Labor untersuchen, um z. B. einen geheimen kryptographischen Schlüssel zu extrahieren, was nicht nur die Vertraulichkeit der Kommunikation zerstört, sondern auch eine Identitäts-Täuschung (das Stehlen der Identität) ermöglicht. Danach kann der Angreifer das Gerät zurückbringen oder ein geklontes Gerät in das Netzwerk einbringen ohne dass der rechtmäßige Besitzer dieses notwendigerweise erkennen kann.

Ein solcher Angriff ist umso wahrscheinlicher erfolgreich, je schneller er durchgeführt werden kann. Denn je eher das angegriffene Gerät wieder im Netzwerk integriert ist, desto geringer ist die Wahrscheinlichkeit, dass sein zeitweiliges Fehlen entdeckt wird. Um die Zeit, die für die Durchführung eines Angriffs auf die Hardware benötigt wird, zu verkürzen, wird ein solcher Angriff normalerweise sorgfältig vorbereitet. Hierfür wird die Krypto-Hardware normalerweise in zwei Schritten angegriffen. Zuerst wird eine Anzahl Geräte analysiert, um das Design und sein Verhalten genau kennen zu lernen. Das Ziel dieses ersten Schrittes ist es, den Angriff auf ein tatsächliches Zielgerät als zweiten Schritt vorzubereiten und zu erleichtern. Voraussetzung dafür, einen solchen Angriff in zwei Schritten durchführen zu können, ist, dass der Angreifer ausreichend viele identische Geräte beschaffen kann. Das ist normalerweise kein Problem, da ASICs in großen Stückzahlen gefertigt werden und so günstig sind, dass ein Angreifer leicht so viele ASICs kaufen kann, wie er benötigt. Nach dieser Vorbereitung können die tatsächlichen Zielgeräte gestohlen und angegriffen werden.

Eine bekannte Angriffsmethode ist die differentielle Leistungsanalyse (engl. Differential Power Analysis, DPA), die eine Auswertung der zeitlichen Abhängigkeit messbarer Leistungsparameter (engl. Power Traces, PT) von Prozessoren von den verarbeiteten Daten während ihrer Verarbeitung beinhaltet.

Das Ziel aller Schutzmaßnahmen gegen DPA lässt sich kurz so formulieren: das Aussehen einer PT einer Krypto-Operation soll so verändert werden, dass der Angreifer nicht erkennen kann, welche Daten, wann und wie bearbeitet werden.

Zum Schutz gegen eine DPA im Falle einer kryptographischen Anwendung, welche die elliptische Kurvenkryptographie (eng. Elliptic Curve Cryptography, ECC) einsetzt, sind folgende Technologien bekannt:
1. Randomisierung des Schlüssels
2. so genanntes Elliptic-Curve-Point Blinding
3. Randomisierung der projektiven Koordinaten der EC-Punkte

Das Hauptziel dieser DPA-Gegenmaßnahmen ist, eine Abhängigkeit messbarer Leistungskurven (engl. Power Traces, PT) von dem Angreifer bekannten Eingabedaten zu vermeiden. Hierzu werden die dem Angreifer bekannten Eingabedaten mit zufälligen Daten verknüpft. So zeigen die PT nicht mehr die Bearbeitung der dem Angreifer bekanntem oder sonstiger vorher definierter (festgelegter) Eingabedaten, sondern die Bearbeitung von dem Angreifer unbekannten Daten.

Weitere mathematische Schutzmechanismen realisieren eine randomisierte Ausführung des Krypto-Algorithmus: der Algorithmus wird nicht mehr sequentiell in einer festvorgegebenen Abfolge mathematischer Operation ausgeführt, sondern die mathematischen Operationen werden durch eine "zufällig bestimmten Reihenfolge" so ersetzt, dass am Ende der Berechnung trotzdem das korrekte Ergebnis geliefert wird. Auf solche Weise wird dem Angreifer das Wissen entzogen, wann genau und genau welche Operationen mit genau welchen Eingabedaten durchgeführt wurden.

Inzwischen wurden die randomisierungsbasierten Schutzmaßnahmen erfolgreich angegriffen. Immer öfter wird in der Literatur die Unsicherheit von Schutzmaßnahmen beschrieben. Die Entwicklung DPA-resistenter Implementierungen wird komplizierter. Da inzwischen Angriffe gegen Schutzmaßnahmen existieren, müssen Schutzmaßnahmen für die Schutzmaßnahmen entworfen und korrekt implementiert werden. Beispielweise kann eine DPA-Schutzmaßnahme - die Randomisierung des Schlüssels - mit einem übertragsbasierten Angriff (engl. carry-based attack) erfolgreich angegriffen werden. Das bedeutet, dass nicht nur die ursprüngliche Krypto-Implementierung gegen DPA geschützt werden muss, sondern dass auch ein Mechanismus, der die Randomisierung des Schlüssels gegen einen übertragsbasierten Angriff schützen kann, entwickelt und implementiert werden muss.

Eine andere Art, die DPA zu erschweren, ist eine wesentliche Erhöhung des Rausch-Niveaus während der Berechnung der Krypto-Operationen. Dadurch wird die für die DPA nützliche Information im Rauschen verschleiert (verborgen). Unter anderem können folgende Maßnahmen genutzt werden, um die für DPA nützliche Information zu verschleiern: Einführung von Pseudo-Operationen (engl. dummy operations), Einführung zufallsbasierter Verzögerungen (engl. random delay) und Einführung zufallsbasierter Pseudo-Operationen (engl. random dummy operation). Da typische ECC-Schaltungen groß sind (tausende Gatter), ist der Signalpegel eines für einen Angreifer nützlichen Signals hoch. Die Erhöhung des Rausch-Niveaus während der Ausführung der EC Krypto-Operation (tausende Takte), um dadurch die Verschleierung der nützlichen Information im Rauschen zu erzielen, ist daher sehr energieaufwendig.

Die Komplexität, die Implementierungs-Zeit und der Kosten-Aufwand der Implementierungen von Krypto-Algorithmen wachsen also stark. Der Energiebedarf und die benötigte Chip-Fläche für die Implementierung von Krypto-Anwendungen mit eingebauten DPA-Gegenmaßnahmen sind in entsprechender Weise gestiegen.

Nachfolgend werden Ausführungsformen der vorliegenden Erfindung beschrieben.

Einen ersten Aspekt der vorliegenden Erfindung bildet eine Vorrichtung zur Multiplikation zweier Bitfolgen, umfassend
- eine Steuereinheit, die ausgebildet ist, aus einer Vielzahl implementierter Multiplikationseinheiten in Abhängigkeit von einem eingangsseitig anliegenden Zufallssignal genau eine- Multiplikationseinheit für die Durchführung der Multiplikation auszuwählen und zu aktivieren,
- eine von allen Multiplikationseinheiten gemeinsam genutzte Teilmultipliziereinheit, die ausgebildet ist, von der jeweils aktivierten Multiplikationseinheit gebildete Operanden zu empfangen und die empfangenen Operanden miteinander zu multiplizieren, wobei
- jede der Multiplikationseinheiten eine andere Multiplikationsmethode zur Durchführung einer Multiplikation implementiert und dafür eine entsprechend der implementierten Multiplikationsmethode ausgebildete Auswahleinheit und eine entsprechend der implementierten Multiplikationsmethode ausgebildete Akkumulationseinheit aufweist, wobei
- die jeweilige Auswahleinheit ausgebildet ist, Schritt für Schritt Segmente der zu multiplizierenden Bitfolgen nach einem der jeweiligen Multiplikationsmethode angepassten Auswahlplan auszuwählen, aus einem oder mehreren Segmenten Operanden zu bilden und an die Teilmultipliziereinheit auszugeben, und wobei
- die jeweilige Akkumulationseinheit ausgebildet ist, von der Teilmultipliziereinheit ausgegebene Teilprodukte Schritt für Schritt zu empfangen, nach einem entsprechend der implementierten Multiplikationsmethode angepassten, zum Auswahlplan passenden Akkumulationsplan zu akkumulieren und nach Abschluss der Akkumulation das so ermittelte Produkt der Bitfolgen auszugeben.

Die Vorrichtung der vorliegenden beruht auf den nachfolgend erläuterten Erkenntnissen.

Die Multiplikation zweier großen Faktoren - z. B. langer Bitfolgen, die bei ECC die Elemente aus *GF(p)* oder aus *GF(2ⁿ)* darstellen - ist eine oft durchgeführte, zeit- und energieaufwendige mathematische Operation. Die Implementierung der Multiplikation als nur ein Berechnungsschritt in Hardware ist möglich, benötigt aber eine große Chipfläche, was vergleichsweise hohe Herstellungskosten verursacht. Um den Flächenbedarf und die Herstellungskosten gering zu halten, wird die Multiplikation von Bitfolgen in Hardwareimplementierungen typischerweise in mehreren Schritten - also seriell - durchgeführt. Dabei werden *n*-Bit große Faktoren A(x) und B(x) in an sich bekannter Weise in kleinere Teile - die Teilfaktoren oder Segmente - aufgeteilt. In einem jeweiligen Schritt (z.B. Taktzyklus) wird nur ein Teil-Produkt berechnet. Aus den berechneten Teil-Produkten ergibt sich (ohne Reduktion) ein *2n-1* bit großes Produkt der Elemente aus *GF(2ⁿ),* oder, bei Elementen aus *GF(p),* ein *2n* bit großes Produkt.

Da die Optimierung der benötigten Chip-Fläche, der Ausführungszeit und des Energieverbrauches eines Multiplizierers wichtig war und ist, existieren heutzutage mehrere Multiplikationsmethoden, die auch seriell ausgeführt werden können. Hierzu zählen beispielsweise die klassische oder Schul-Multiplikationsmethode, die Karatsuba-Multiplikationsmethode, die Winograd-Multiplikationsmethode und weitere an sich bekannte Multiplikationsmethoden.

Von dieser Vielfalt macht die vorliegende Erfindung Gebrauch: sie nutzt aus, dass unterschiedliche serielle Multiplikationsmethoden in der Regel eine jeweils unterschiedliche Segmentierung der Faktoren verwenden, eine jeweils unterschiedliche Anzahl Ausführungsschritte benötigen und eine jeweils unterschiedliche Formel für die Berechnung des Produktes aus den Teil-Produkten implementieren. Mit anderen Worten: unterschiedliche serielle Multiplikationsmethoden haben einen jeweils unterschiedlichen Ausführungsplan der Multiplikation und eine eigene Komplexität, die sich in einer Anzahl notwendiger Boolescher Operationen äußert. Es gibt zwar einige serielle Multiplikationsmethoden, die eine gleiche Segmentierung der Faktoren verwenden. Trotzdem sind der Ausführungsplan und die Komplexität jeder solchen Multiplikationsmethode unterschiedlich, d.h. individuell.

Eine herkömmliche Vorrichtung zur seriellen Multiplikation zweier Bitfolgen hat grundsätzlich drei Einheiten:
1. Einheit: Auswahleinheit - Auswahl der Operanden für die Teilmultiplikation.
   Diese Einheit teilt die Faktoren in m-Bit große Segmente auf, berechnet und liefert dem nachgeschalteten Teilmultiplizierer seine m-Bit große Operanden schrittweise entsprechend dem Auswahlplan der festgelegten verwendeten Multiplikationsmethode.
2. Einheit: Teilmultiplizierereinheit
   Diese Einheit berechnet Teilprodukte der m-Bit großen Operanden, typischerweise ein Teilprodukt in jeweils einem Schritt Die Teilmultipliziereinheit weist eine Vielzahl interner Teilmultiplizierer auf und ist ausgebildet, in einem jeweiligen Schritt aus den zugeführten Operanden Teil-Operanden mit vorbestimmter Bitanzahl zu bilden und auf eine vorbestimmte, für die Multiplikation der Operanden notwendige Anzahl der Teilmultiplizierer zu verteilen, sowie anhand der Ausgaben der vorbestimmten Anzahl der Teilmultiplizierer ein jeweiliges Teilprodukt zu ermitteln. Die Struktur der Teilmultiplizierer-Einheit ist fest vorgegeben und verändert sich nicht im Laufe der Berechnung.
3. Einheit: Akkumulationseinheit - Akkumulation der Teilprodukte
   Diese Einheit berechnet das Produkt aus den Teilprodukten entsprechend dem vorbestimmten und festgelegten Akkumulationsplan der verwendeten Multiplikationsmethode.

Im Unterschied zu einer solchen herkömmlichen Struktur hat die erfindungsgemäße Vorrichtung eine Vielzahl Multiplikationseinheiten. Jede der Multiplikationseinheiten implementiert eine andere Multiplikationsmethode zur Durchführung einer (insbesondere seriellen) Multiplikation und weist dafür eine entsprechend der implementierten Multiplikationsmethode ausgebildete Auswahleinheit und eine entsprechend der implementierten Multiplikationsmethode ausgebildete Akkumulationseinheit auf. Eine Steuereinheit ist ausgebildet, in Abhängigkeit von einem eingangsseitig anliegenden Zufallssignal eine Zufallsauswahl genau einer dieser Multiplikationseinheiten für die Durchführung der Multiplikation und die ausgewählte Multiplikationseinheit zu aktivieren. Dies macht den Energieverbrauch nicht nur von Eingabedaten abhängig, sondern auch von der jeweils aktiven, in der Berechnung beteiligten Struktur.

Die verschiedenen Multiplikationseinheiten teilen sich jedoch eine von allen Multiplikationseinheiten gemeinsam genutzte Teilmultipliziereinheit, die ausgebildet ist, von der jeweils aktivierten Multiplikationseinheit gebildete Operanden zu empfangen und die empfangenen Operanden miteinander zu multiplizieren.

Im Unterschied zu herkömmlichen Strukturen,, wo der Akkumulationsplan vorbestimmt und festgelegt ist, kann die erfindungsgemäße Vorrichtung die Multiplikationsmethode und somit den Auswahl- und Akkumulationsplan in Abhängigkeit von einem Zufallssignale variieren. Diese Tatsache macht den Energieverbrauch nicht nur von Eingabedaten abhängig, sondern auch von der aktiven, in der Berechnung beteiligten Struktur.

Auf diese Weise - durch eine zufällige Wahl der Multiplikationsmethode und somit des Auswahl- und Akkumulationsplans der verwendeten Multiplikationsmethode - gelingt eine für Angreifer weder vorhersehbare noch mit einem PA-Seitenkanalangriff nachträglich (mit für den Angreifer lohnenswert erscheinendem Aufwand) erschließbare Durchführung von Multiplikationsoperationen, was insbesondere im Rahmen kryptographischer Operationen einen deutlich erhöhten Schutz bietet.

Die Struktur der erfindungsgemäßen Vorrichtung zur Multiplikation ist auf diese Weise so implementiert, dass der Schutz der kryptographischen Operation, im Gegensatz zu den bekannten zusätzlich eingebauten PA-Gegenmaßnahmen, *intrinsisch* in der Implementierung enthalten ist.

Nachfolgend werden Ausführungsbeispiele der Vorrichtung des ersten Aspekts der Erfindung beschrieben.

In manchen Ausführungsformen ist die Vorrichtung ausgebildet, eine Multiplikation von zweier zu multiplizierenden Bitfolgen in einem einzelnen Schritt, also insbesondere einem Taktzyklus auszuführen. Dies gelingt, wenn die Länge der zu multiplizierenden Bitfolgen kleiner ist als die Länge der Operanden, welche die Teilmultiplizierereinheit miteinander multipliziert. In anderen Ausführungsformen ist sie ausgebildet, eine Multiplikation vn empfangenen Operanden in mehreren Schritten bzw. Taktzyklen durchzuführen. Dies kann im Schaltungsentwurf beispielsweise anhand der Länge der zu empfangenen Operanden unter Berücksichtigung von weiteren Randbedingungen für das Design und die Betriebserfordernisse der Teilmultipliziereinheit entschieden werden.

Bei der erfindungsgemäßen Vorrichtung ist in einer Ausführungsform die Multiplikationseinheit, und zwar insbesondere die Auswahleinheit oder die Akkumulationseinheit, oder die Auswahleinheit und die Akkumulationseinheit als funktionell zusammenwirkende Einheit betrachtet, ausgebildet, die im jeweiligen Auswahlplan und im jeweiligen Akkumulationsplan vorgegebenen Auswahlschritte und Akkumulationsschritte in zufälliger Reihenfolge durchzuführen, insbesondere, die Reihenfolge der vorgegebenen Auswahl- und Akkumulationsschritte eines betreffenden Multiplikations-Ausführungsplans zufällig zu permutieren. Zum Beispiel ist die jeweilige Auswahleinheit ausgebildet, in Abhängigkeit von einem zweiten Zufallssignal die im Auswahlplan vorgegebenen Segmente zufällig auszuwählen und aus den ausgewählten Segmenten die Operanden zu bilden, und entsprechend der erfolgten Auswahl der Akkumulationseinheit jeweils zu signalisieren, welche Operanden zur Teilmultiplikation ausgegeben sind.

Bei einer anderen Ausführung dieser Vorrichtung ist die Akkumulationseinheit ausgebildet zu ermitteln, ob aktuell ausgewählte Segmente im Rahmen der zufälligen Auswahl zum wiederholten Male ausgewählt wurden, und gegebenenfalls ein entsprechendes, zum wiederholten Male empfangenes Teilprodukt zu verwerfen.

Die Auswahleinheit ist in einer anderen Ausführungsform ausgebildet, Auswahl-Wiederholungen im Rahmen der zufälligen Auswahl zu unterbinden. Hierzu können Register Verwendung finden, in denen bereits ausgewählte Segmente temporär gespeichert werden. Es können alternativ nach jedem zufälligen Auswahlschritt die aktuell ausgewählten Segmente aus der Menge laut Auswahlplan auszuwählender Segmente entfernt werden.

Die Teilmultipliziereinheit weist in einer Ausführungsform vorzugsweise eine Gesamtanzahl von (internen) Teilmultiplizierern auf, die größer ist als die vorbestimmte, für die Berechnung notwendige Anzahl der Teilmultiplizierer, und ist ausgebildet, aus den einem jeweiligen Schritt zugeführten Operanden Teil-Operanden mit vorbestimmter Bitanzahl zu bilden und die Teil-Operanden auf eine vorbestimmte Anzahl aktiver Teilmultiplizierer aus der Vielzahl der Teilmultiplizierer zu verteilen sowie anhand der Ausgaben der Teilmultiplizierer ein jeweiliges Teilprodukt zu ermitteln, und die Gesamtanzahl der Teilmultiplizierer umfasst mindestens zwei Gruppen von Teilmultiplizierern, die gruppenweise unterschiedliche Multiplikationsmethoden implementieren. Die Teilmultipliziereinheit ist ausgebildet, die vorbestimmte Anzahl aktiver Teilmultiplizierer aus der Gesamtanzahl der Teilmultiplizierer mit der Maßgabe zufällig auszuwählen, dass mindestens einer der Teilmultiplizierer zu einer anderen Gruppe von Teilmultiplizierern gehört als die anderen ausgewählten Teilmultiplizierer, und die Teil-Operanden nur auf die zufällig ausgewählten Teilmultiplizierer zu verteilen. Im Unterschied zu herkömmlichen Strukturen, in denen die Struktur der Teilmultipliziereinheit fest vorgegeben ist und sich im Laufe der Berechnung des Produktes zweier eingehender Bitfolgen nicht verändert, enthält die Vorrichtung der vorliegenden Ausführungsform also eine Teilmultipliziereinheit, in der sich der für die Berechnung des jeweiligen Teilproduktes aktivierte Teil dynamisch, nämlich im Laufe der Berechnung, verändert. Diese Tatsache macht den Energieverbrauch nicht nur auf der Ebene der Multiplikationseinheit, sondern auch auf der Ebene der von allen Multiplikationseinheiten gemeinsam genutzten Teilmultipliziereinheit zusätzlich von der jeweils aktiven, in der Berechnung beteiligten Struktur der betreffenden Teilmultiplizierer abhängig.

In einer anderen Ausführungsform der Vorrichtung weist die Teilmultipliziereinheit eine Eingangseinheit auf, die ausgebildet ist, aus den ihr zugeführten Operanden Teil-Operanden mit vorbestimmter Bitanzahl zu bilden und die Teil-Operanden in zufälliger

Weise einer vorbestimmten Anzahl von Teilmultiplizierern zuzuordnen und zuzuführen, sowie Steuerinformation auszugeben, welche die vorgenommene Zuordnung der Teil-Operanden auf die Teilmultiplizierer anzeigt. In dieser Ausführungsform hat die Teilmultipliziereinheit nicht mehr Teilmultiplizierer als eine vorbestimmte, für die Teil-Multiplikation notwendige Anzahl der Teilmultiplizierer. Die Gesamtanzahl der Teilmultiplizierer verteilt sich auf mindestens zwei Gruppen mit jeweils mindestens einem Teilmultiplizierer, und der oder die Teilmultiplizierer jeder der Gruppen implementieren eine andere Multiplikationsmethode als die Teilmultiplizierer der anderen Gruppen. Weiterhin weist die Teilmultipliziereinheit vorzugsweise eine Ausgangseinheit aufweist, die die Steuerinformation empfängt und ausgebildet ist, in Abhängigkeit von der Steuerinformation berechnete Teilprodukte von den jeweiligen Teilmultiplizierern zu empfangen und auszugeben.

Ein zweiter Aspekt ist eine Vorrichtung zur Multiplikation zweier Bitfolgen, wie in Anspruch 5 definiert. Sie umfasst:
- eine Teilmultipliziereinheit, die ausgebildet ist, Operanden zu empfangen und - vorzugsweise in einem, also einem einzigen Schritt - miteinander zu multiplizieren
- eine Auswahleinheit, die ausgebildet ist, Schritt für Schritt Segmente der zu multiplizierenden Bitfolgen nach einem Auswahlplan auszuwählen, aus einem oder mehreren Segmenten die Operanden zu bilden und an die Teilmultipliziereinheit auszugeben,
- eine Akkumulationseinheit, die ausgebildet ist, von der Teilmultipliziereinheit ausgegebene Teilprodukte zu empfangen, nach einem zum Auswahlplan passenden Akkumulationsplan zu akkumulieren und nach Abschluss der Akkumulation das so ermittelte Produkt der Bitfolgen auszugeben, wobei
- die Auswahleinheit und die Akkumulationseinheit ausgebildet sind, eine Reihenfolge von im jeweiligen Auswahlplan und im jeweiligen Akkumulationsplan vorgegebenen Auswahlschritten und Akkumulationsschritten zufällig zu permutieren.

Ausführungsformen dieser Vorrichtung können dieselben zusätzlichen Merkmale aufweisen wie die bereits beschriebenen Ausführungsformen der Vorrichtung des ersten Aspekts. Nachfolgend werden weitere Ausführungsbeispiele der Vorrichtung des zweiten Aspekts beschrieben.

In dieser Vorrichtung weist die Teilmultipliziereinheit eine Vielzahl Teilmultiplizierer auf und ist ausgebildet, aus den in einem jeweiligen Schritt zugeführten Operanden Teil-Operanden mit vorbestimmter Bitanzahl zu bilden und die Teil-Operanden auf eine vorbestimmte Anzahl aktiver Teilmultiplizierer aus der Vielzahl der Teilmultiplizierer zu verteilen sowie anhand der Ausgaben der Teilmultiplizierer ein jeweiliges Teilprodukt zu ermitteln.

In einer ersten von zwei alternativen Varianten dieser Vorrichtung weist die Teilmultipliziereinheit eine Gesamtanzahl von Teilmultiplizierern auf, die größer ist als die vorbestimmte, für die Ermittlung des Teilprodukts notwendige Anzahl der Teilmultiplizierer, und anhand der Ausgaben der Teilmultiplizierer ein jeweiliges Teilprodukt ermittelt, und umfasst die Gesamtanzahl der Teilmultiplizierer mindestens zwei Gruppen von Teilmultiplizierern, die gruppenweise unterschiedliche Multiplikationsmethoden implementieren. In dieser Variante ist die Teilmultipliziereinheit vorzugsweise ausgebildet, die vorbestimmte Anzahl aktiver Teilmultiplizierer aus der Gesamtanzahl der Teilmultiplizierer mit der Maßgabe zufällig auszuwählen, dass mindestens einer der Teilmultiplizierer zu einer anderen Gruppe von Teilmultiplizierern gehört als die anderen ausgewählten Teilmultiplizierer, und die Teil-Operanden nur auf die zufällig ausgewählten Teilmultiplizierer zu verteilen.

In einer zweiten dieser zwei alternativen Varianten der genannten Vorrichtung weist die Teilmultipliziereinheit eine Eingangseinheit auf, die ausgebildet ist, in einem Schritt aus den ihr zugeführten Operanden Teil-Operanden mit vorbestimmter Bitanzahl zu bilden und die Teil-Operanden in zufälliger Weise einer vorbestimmten Anzahl von Teilmultiplizierern zuzuordnen und auszugeben, sowie Steuerinformation auszugeben, welche die vorgenommene Zuordnung der Teil-Operanden auf die Teilmultiplizierer anzeigt. In dieser Variante hat die Teilmultipliziereinheit vorzugsweise nicht mehr Teilmultiplizierer als eine vorbestimmte, für die Teil-Multiplikation notwendige Anzahl der Teilmultiplizierer. Eine Gesamtanzahl der Teilmultiplizierer verteilt sich dabei vorzugsweise auf mindestens zwei Gruppen mit jeweils mindestens einem Teilmultiplizierer, wobei die Teilmultiplizierer jeder der Gruppen eine andere Multiplikationsmethode implementieren als die Teilmultiplizierer der anderen Gruppen. Die Teilmultipliziereinheit weist hierbei vorzugsweise eine Ausgangseinheit auf, die die Steuerinformation empfängt und ausgebildet ist, in Abhängigkeit von der Steuerinformation Ausgaben von den jeweiligen Teilmultiplizierern zu empfangen und anhand der Ausgaben das jeweilige Teilprodukt zu ermitteln und auszugeben.

Zur Ermittlung des Teilprodukts dient typischwerweise ein geeigneter Teil-Akkumulationsplan, der je nach implementierter Multiplikationsmethode für die in der Steuerinformation benannten Teilmultiplizierer unterschiedlich ist.

Ein dritter Aspekt ist eine Vorrichtung zur Multiplikation zweier Bitfolgen, umfassend
- eine Auswahleinheit, die ausgebildet ist, Schritt für Schritt Segmente der zu multiplizierenden Bitfolgen nach einem Auswahlplan auszuwählen, aus den ausgewählten Segmenten die Eingaben für die Teilmultipliziereinheit zu gestalten und an die Teilmultipliziereinheit auszugeben,
- eine Teilmultipliziereinheit, die ausgebildet ist, die zugeführte Operanden zu empfangen und in einen Schritt miteinander zu multiplizieren,
- eine Akkumulationseinheit, die ausgebildet ist, von der Teilmultipliziereinheit ausgegebene Teilprodukte Schritt für Schritt zu empfangen, nach einem zum Auswahlplan passenden Akkumulationsplan zu akkumulieren und nach Abschluss der Akkumulation das so ermittelte Produkt der Bitfolgen auszugeben, wobei
- die Teilmultipliziereinheit eine Vielzahl Teilmultiplizierer aufweist und ausgebildet ist, aus den in einem Schritt zugeführten Operanden Teil-Operanden mit vorbestimmter Bitanzahl zu bilden und die Teil-Operanden auf eine vorbestimmte Anzahl aktiver Teilmultiplizierer aus der Vielzahl der Teilmultiplizierer zu verteilen sowie anhand der Ausgaben der Teilmultiplizierer ein jeweiliges Teilprodukt zu ermitteln.

Die weitere Ausgestaltung dieser Vorrichtung des dritten Aspekts ist in einer Vorrichtung entsprechend einem ersten Unteraspekt des dritten Aspekts wie folgt:
- die Teilmultipliziereinheit weist eine Gesamtanzahl von Teilmultiplizierern auf, die größer ist als die vorbestimmte, für die Ermittlung des jeweiligen Teilproduktes notwendige Anzahl der Teilmultiplizierer und die Gesamtanzahl der Teilmultiplizierer umfasst mindestens zwei Gruppen von Teilmultiplizierern, die gruppenweise unterschiedliche Multiplikationsmethoden implementieren; und
- die Teilmultipliziereinheit ist ausgebildet, die vorbestimmte Anzahl aktiver Teilmultiplizierer aus der Gesamtanzahl der Teilmultiplizierer mit der Maßgabe zufällig auszuwählen, dass mindestens einer der Teilmultiplizierer zu einer anderen Gruppe von Teilmultiplizierern gehört als die anderen ausgewählten Teilmultiplizierer, und die Teil-Operanden nur auf die zufällig ausgewählten Teilmultiplizierer zu verteilen.

Die Vorrichtung des dritten Aspekts ist alternativ zum ersten Unteraspekt entsprechend einem zweiten Unteraspekt des dritten Aspekts wie folgt weiter ausgebildet:
- die Teilmultipliziereinheit weist eine Eingangseinheit auf, die ausgebildet ist, in einem Schritt aus den ihr zugeführten Operanden Teil-Operanden mit vorbestimmter Bitanzahl zu bilden und die Teil-Operanden in zufälliger Weise einer vorbestimmten Anzahl von Teilmultiplizierern zuzuordnen und Steuerinformation auszugeben, welche die vorgenommene Zuordnung der Teil-Operanden auf die Teilmultiplizierer anzeigt, wobei
- die Teilmultipliziereinheit nicht mehr Teilmultiplizierer als eine vorbestimmte, für die Teil-Multiplikation notwendige Anzahl der Teilmultiplizierer hat,
- eine Gesamtanzahl der Teilmultiplizierer sich auf mindestens zwei Gruppen mit jeweils mindestens einem Teilmultiplizierer verteilt und die Teilmultiplizierer jeder der Gruppen eine andere Multiplikationsmethode implementieren als die Teilmultiplizierer der anderen Gruppen, und wobei
- die Teilmultipliziereinheit eine Ausgangseinheit aufweist, die die Steuerinformation empfängt und ausgebildet ist, in Abhängigkeit von der Steuerinformation anhand der Ausgaben der Teilmultiplizierer das jeweilige Teilprodukt zu ermitteln und auszugeben.

Ausführungsformen dieser Vorrichtung können dieselben zusätzlichen Merkmale aufweisen wie die bereits beschriebenen Ausführungsformen der Vorrichtung des ersten oder des zweiten Aspekts. Nachfolgend werden weitere Ausführungsbeispiele der Vorrichtung aller drei Aspekte beschrieben.

Eine Ausführungsform der verschiedenen hier beschriebenen Vorrichtungen der unterschiedlichen Aspekte der Erfindung ist eine jeweilige elektronische Schaltung, welche also eine Vorrichtung nach einem der hier beschriebenen Aspekte oder eines seiner jeweiligen Ausführungsbeispiele implementiert.

Eine weitere Ausführungsform bildet eine kryptographische Vorrichtung zur Verschlüsselung oder Entschlüsselung binär kodierter Information, umfassend eine Vorrichtung oder eine elektronische Schaltung nach einem der hier beschriebenen Aspekte oder einem seiner jeweiligen Ausführungsbeispiele.

Ein vierter Aspekt ist ein hardwareimplementiertes Verfahren zur Multiplikation zweier Bitfolgen, umfassend
- zufälliges Auswählen und Aktivieren genau einer Multiplikationseinheit aus einer Vielzahl paralleler Multiplikationseinheiten für die Durchführung der Multiplikation, wobei
- jede der Multiplikationseinheiten eine andere Multiplikationsmethode zur Durchführung der Multiplikation implementiert und dafür eine entsprechend der implementierten Multiplikationsmethode ausgebildete Auswahleinheit und eine entsprechend der implementierten Multiplikationsmethode ausgebildete Akkumulationseinheit aufweist, wobei
- die Auswahleinheit der jeweils aktivierten Multiplikationseinheit Schritt für Schritt Segmente der zu multiplizierenden Bitfolgen nach einem der jeweiligen Multiplikationsmethode angepassten Auswahlplan auswählt, aus den ausgewählten Segmenten Operanden für eine Teilmultiplikation bildet und an eine Teilmultipliziereinheit ausgibt,
- alle Multiplikationseinheiten gemeinsam genau eine Teilmultipliziereinheit nutzen, die aus einem oder mehreren Segmenten gebildete Operanden von der jeweils aktivierten Multiplikationseinheit empfängt und miteinander multipliziert, wobei
- die Akkumulationseinheit der aktivierten Multiplikationseinheit von der Teilmultipliziereinheit ausgegebene Teilprodukte Schritt für Schritt empfängt, nach einem entsprechend der implementierten Multiplikationsmethode angepassten, zum Auswahlplan passenden Akkumulationsplan akkumuliert und nach Abschluss der Akkumulation das so ermittelte Produkt der Bitfolgen ausgibt.

Ein fünfter Aspekt ist ein hardwareimplementiertes Verfahren zur Multiplikation zweier Bitfolgen, umfassend
- Auswählen von Segmenten der zu multiplizierenden Bitfolgen und Bilden der Operanden für Teil-Multiplikation Schritt für Schritt nach einem Auswahlplan,
- Empfangen und Multiplizieren der gebildeten Operanden in einem Schritt in einer Teilmultipliziereinheit zur Bildung von Teilprodukten,
- Empfangen und Akkumulieren der Teilprodukte nach einem zum Auswahlplan passenden Akkumulationsplan und Ausgeben des so ermittelten Produkts der Bitfolgen nach Abschluss der Akkumulation, wobei
   a) entweder
      - zur Multiplikation der empfangenen Operanden in einer Teilmultiplizierereinheit von den Operanden Teil-Operanden mit vorbestimmter Bitanzahl gebildet werden und auf eine vorbestimmte Anzahl (interner) Teilmultiplizierer der Teilmultipliziereinheit verteilt werden sowie anhand der Ausgaben der Teilmultiplizierer ein jeweiliges Teilprodukt ermittelt wird, wobei
      - die Teilmultipliziereinheit eine Gesamtanzahl von Teilmultiplizierern aufweist, die größer ist als die vorbestimmte, für die Ermittlung des jeweiligen Teilproduktes notwendige Anzahl der Teilmultiplizierer, und die Gesamtanzahl der Teilmultiplizierer mindestens zwei Gruppen von Teilmultiplizierern umfasst, die gruppenweise unterschiedliche Multiplikationsmethoden implementieren, wobei
      - die Teilmultipliziereinheit die vorbestimmte Anzahl aktiver Teilmultiplizierer aus der Gesamtanzahl der Teilmultiplizierer mit der Maßgabe zufällig auswählt, dass mindestens einer der Teilmultiplizierer zu einer anderen Gruppe von Teilmultiplizierern gehört als die anderen ausgewählten Teilmultiplizierer, und die Teil-Operanden nur auf die zufällig ausgewählten Teilmultiplizierer verteilt,
   b) oder
      - die Teilmultipliziereinheit aus den ihr zugeführten Operanden Teil-Operanden mit vorbestimmter Bitanzahl bildet und die Teil-Operanden in zufälliger Weise einer vorbestimmten Anzahl von Teilmultiplizierern zuordnet und ausgibt, sowie Steuerinformation ausgibt, welche die vorgenommene Zuordnung der Teil-Operanden auf die Teilmultiplizierer anzeigt, wobei
      - die Teilmultipliziereinheit nicht mehr Teilmultiplizierer als eine vorbestimmte, für die Teil-Multiplikation notwendige Anzahl der Teilmultiplizierer hat,
      - eine Gesamtanzahl der Teilmultiplizierer der Teilmultipliziereinheit sich auf mindestens zwei Gruppen mit jeweils mindestens einem Teilmultiplizierer verteilt und die Teilmultiplizierer jeder der Gruppen eine andere Multiplikationsmethode implementieren als die Teilmultiplizierer der anderen Gruppen, und wobei
      - die Teilmultipliziereinheit in Abhängigkeit von der Steuerinformation von den jeweils darin angezeigten Teilmultiplizierern Ausgaben empfängt und das jeweilige Teilprodukt ermittelt und ausgibt.

Ein anderer Aspekt der Erfindung ist ein hardwareimplementiertes Verfahren zur Multiplikation zweier Bitfolgen, umfassend
- Auswählen von Segmenten der zu multiplizierenden Bitfolgen und Bilden von Operanden für Teil-Multiplikationen Schritt für Schritt nach einem Auswahlplan,
- Empfangen und Multiplizieren der Operanden in einen Schritt zur Bildung von Teilprodukten,
- Empfangen und Akkumulieren der Teilprodukte nach einem zum Auswahlplan passenden Akkumulationsplan und Ausgeben des so ermittelten Produkts der Bitfolgen nach Abschluss der Akkumulation, wobei
- die im jeweiligen Auswahlplan und im jeweiligen Akkumulationsplan vorgegebenen Auswahlschritte und Akkumulationsschritte in zufälliger Reihenfolge durchgeführt werden.

Ein Vorteil des hier vorgeschlagenen Ansatzes, den alle vorstehend beschriebenen Aspekte umsetzen, ist, dass der Schutz der Operation intrinsisch in der Implementierung enthalten ist. Das heißt: durch die zufällige Wahl der Multiplikationsmethode für jede Ausführung der (insbesondere seriellen) Multiplikation wird die Anzahl der für die Berechnung des Produktes notwendigen Schritte variiert. Die Dauer einer Bearbeitung von Bitfolgen (zum Beispiel eines kryptographischen Schlüssels), in der mehrere Multiplikationen durchzuführen sind, verändert sich daher in von außen nicht vorhersehbarer oder nachvollziehbarer Weise. Diese erfindungsgemäße Lösung erfordert anders als bekannte Lösungen keine zusätzlichen Dummy-Operationen oder Hinzufügung von zufälligen Verzögerungen. Vielmehr werden nur für die Berechnung tatsächlich auch notwendige Operationen durchgeführt. Dadurch, und gegebenenfalls zusätzlich durch eine zufällige Permutation der Schritte des Ausführungsplans der Multiplikation, wird einem Angreifer die Möglichkeit entnommen, Kenntnis davon zu erlangen, welche Daten in welchem Schritt und wie genau verarbeitet wurden. So wird ein ähnliches Ergebnis wie beim bekannten "Blinding" der Inputs erreicht. Im Gegensatz zum "Blinding" wird aber keine zusätzliche Operation benötigt, die dann bei einem Angriff durch Injektion eines Fehlers übersprungen werden kann.

Nachfolgend werden weitere Ausführungsformen anhand der Figuren erläutert. Es zeigen.
- Fig. 1: ein Blockschaltbild einer seriellen Implementierung der Multiplikation der Elemente aus *GF(2ⁿ)* ohne Reduktion nach dem Stand der Technik;
- Fig. 2: ein Blockschaltbild einer Hardware-Implementierung einer Multiplikationsvorrichtung zur Multiplikation zweier Bitfolgen mit einer Wahl der MultiplikationsMethode für die Multiplikation;
- Fig. 3: ein Blockschaltbild einer weiteren Hardware-Implementierung einer Multiplikationsvorrichtung zur Multiplikation zweier Bitfolgen mit einer festgelegten Multiplikationsmethode für die Multiplikation und mit mehreren Teilmultipliziereinheiten, die ein jeweiliges Teil-Produkt in einem Schritt berechnen können, wobei alle Teilmultiplizier-Einheiten eine eigene - individualisierte - Struktur haben;
- Fig. 4: ein Blockschaltbild einer weiteren Hardware-Implementierung einer Multiplikationsvorrichtung zur Multiplikation zweier Bitfolgen mit einer Teilmultipliziereinheit, deren aktive Struktur dynamisch - in jedem Schritt eines Multiplikationsplans - individualisierbar ist; und
- Fig. 5: ein Blockschaltbild einer Variante der Hardware-Implementierung einer Multiplikationsvorrichtung aus Fig. 4.

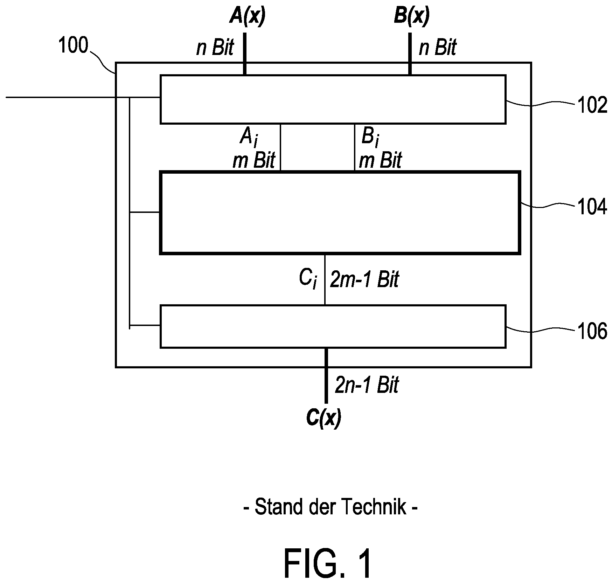

Fig. 1 zeigt ein Blockschaltbild einer hardwareimplementierten, also als monolithische elektronische Schaltung ausgebildeten Vorrichtung 100 zur seriellen Multiplikation zweier Bitfolgen aus *GF(2ⁿ)* ohne Reduktion nach dem Stand der Technik. Zwei jeweils n Bit große Bitfolgen A(x) und B(x) werden einer Auswahleinheit 102 zugeführt, die aus den Bitfolgen nach einem vorbestimmten Auswahlplan m Bit große Operanden Aᵢ und Bᵢ bildet, m<n. Diese werden einer Teilmultiplizierereinheit 104 zugeführt, welche entsprechend 2m-1 große Teilprodukte bestimmt. Die Teilprodukte werden einer Akkumulationseinheit 106 zugeführt, welche nach einem vorbestimmten Akkumulationsplan das 2n-1 Bit große Produkt C(x) der Bitfolgen A(x) und B(x) bestimmt. Alle Einheiten werden mit einem gemeinsamen Takt von einer hier nicht dargestellten Taktsignalquelle betrieben, was durch eine den Blöcken seitlich von links zugeführte Taktleitung symbolisiert ist.

Der Einfluss eines solchen Multiplizierers auf den Energieverbrauch des Krypto-Chips während der Ausführung einer kP-Operation ist so stark, dass sein Energieverbrauch das Profil einer in einem Angriff abgreifbaren Power Trace (PT) bestimmen kann. Da die PT ein für einen Seitenkanal-Angriff geeignetes Leck (engl. SCA Leakage) darstellt, ist es wünschenswert, dieses Leck zu verschließen. Die Analyse einer PT kann erfindungsgemäß auf folgende Weise erschwert werden:
1 - durch die zufällige Wahl der Multiplikations-Methode für jede serielle Durchführung der Multiplikation
2 - durch die zufällige Permutation der Schritte des Ausführungsplans der seriellen Multiplikation
3 - durch Individualisierung der Struktur der Teilmultipliziereinheit für jede Berechnung des Teil-Produktes mittels zufälliger Aktivierung einer der individualisierten Teil-Multiplizierer-Einheiten oder mittels zufälliger Aktivierung der x ausreichenden aus k implementierten individualisierten inneren Teil-Multiplizierers, mit *x*≤*k.* Im Spezialfall *k*=*x*, und wenn die Teil-Multiplizierer individualisiert sind, können die Inputs "durchgemischt" geliefert werden. Das bedeutet, dass in jedem Takt die Teil-Operanden zufällig verteilt werden, aber die innere Teil-Akkumulationseinheit ausgebildet ist, die Produkte der Teil-Operanden "richtig" zu addieren.

Alle drei Maßnahmen können miteinander beliebig kombiniert werden. Nachfolgend werden diese Maßnahmen einzeln beschrieben.

### 1. Randomisierte Aktivierung einer von mehreren implementierten Multiplikations-Methoden für die (serielle) Berechnung des Produktes

Es kann in ein und derselben Vorrichtung eine Vielzahl unterschiedlicher Multiplikationsmethoden implementiert werden. Vor jeder Multiplikation wird nur eine der implementierten Multiplikationsmethoden auf eine zufällige Weise aktiviert, um das Produkt zu berechnen.

Dabei ist in einer Ausführungsform die folgende Optimierung der Ressourcen vorgesehen:
Alle implementierten Multiplikationsmethoden benutzen dieselbe (zum Beispiel nur eine einzige im Design verfügbare) Teilmultipliziereinheit. Besonders leicht ist dies zu implementieren, wenn alle Multiplikationsmethoden (MM) eine gleiche Aufteilung der Operanden verwenden, so dass die beiden *n*-Bit großen Bitfolgen (Faktoren) in ξ *m*-Bit große Segmente aufgeteilt werden, mit *m*=*n*/*ξ*. In diesem Fall unterscheiden sich die implementierten Multiplikations-Methoden in der jeweiligen Anzahl der Ausführungsschritte (oder Ausführungstakte), d.h. jede Multiplikationsmethode *MMⱼ* braucht ihre eigene Anzahl der Takte *Nⱼ*. Die taktweise Auswahl der Segmente für die Berechnung der Operanden für die Teilmultipliziereinheit und der Akkumulationsplan der ermittelten Teil-Produkte, d.h. der Ausführungsplan der Multiplikation, hängt von der ausgewählten Multiplikationsmethode ab. Das heißt, in diesem Fall besteht der Multiplizierer aus *J* Auswahl-Blöcken für die Auswahl der Operanden der Teilmultiplikation (TM), aus nur einer Teilmultipliziereinheit und aus einer Akkumuliationseinheit mit *J* Blöcken "Akkumulation der Teil-Produkte", wenn im Design insgesamt *J* Multiplikationsmehtoden implementiert wurden.

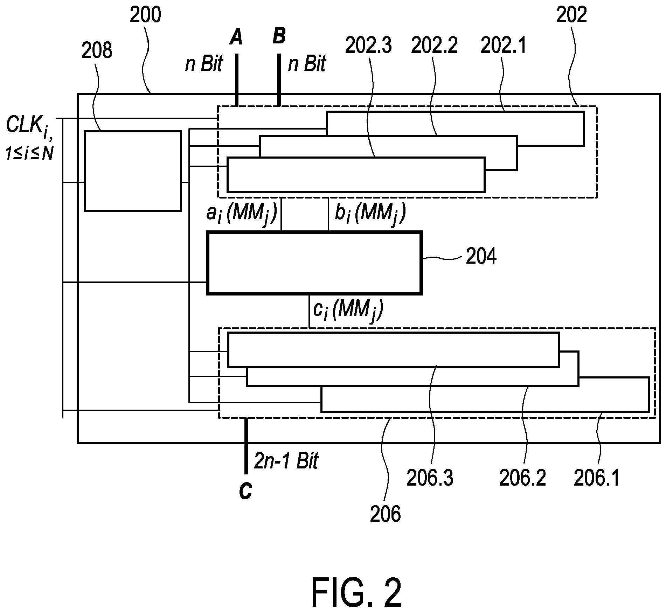

Die Struktur eines solchen Polynom-Multiplizierers ist in Fig. 2 schematisch dargestellt. Fig. 2 zeigt ein Blockschaltbild einer hardwareimplementierten, also als monolithische elektronische Schaltung ausgebildeten Vorrichtung 200 zur seriellen Multiplikation zweier Bitfolgen aus *GF(2ⁿ)* ohne Reduktion. Die vorliegende Ausführungsform implementiert drei Multiplikationsmethoden, wobei diese Anzahl vorliegend aus Gründen der übersichtlichen graphischen Darstellbarkeit im Rahmen der vorliegenden Anmeldung gewählt ist, aber nicht als Beschränkung der Erfindung auf diese Anzahl zu verstehen ist.

Zwei jeweils n Bit große Bitfolgen A(x) und B(x) werden einem Auswahlblock 202 zugeführt. Der Auswahlblock 202 enthält eine der Anzahl implementierte Multiplikationsmethoden entsprechende Vielzahl Auswahleinheiten 202.1 bis 202.3. Jede dieser Auswahleinheiten ist ausgebildet, aus den Bitfolgen nach einem jeweiligen, der Multiplikationsmethode entsprechenden vorbestimmten Auswahlplan *m* Bit große Operanden *aᵢ(MMⱼ)* und *bᵢ(MMⱼ)* zu bilden, *m*<*n.* Diese Operanden werden einer gemeinsamen Teilmultipliziereinheit 204 zugeführt, welche entsprechend *2m*-1 große Teilprodukte cᵢ(MMⱼ) bestimmt. Die Teilprodukte werden einer der gewählten Multiplikationsmethode entsprechenden Akkumulationseinheit 206.1, 206.2, oder 206.2 eines Akkumulationsblocks 206 zugeführt, welche nach einem vorbestimmten und der gewählten Multiplikationsmethode entsprechenden Akkumulationsplan das *2n-1* Bit große Produkt *C(x)* der Bitfolgen A(x) und B(x) bestimmt.

Die zur Implementierung einer bestimmten Multiplikationsmethode gehörenden Auswahl- und Akkumulationseinheiten werden in der vorliegenden Anmeldung in einer alternativen funktionellen Betrachtungsweise auch als jeweilige Multiplikationseinheit benannt.

Die Verteilung der Einheiten über die Chipfläche kann nach bekannten Methoden des Schaltungsdesigns vorgenommen werden. Die graphische Zusammenstellung der Auswahleinheiten 202.1 bis 202.3 in einem Auswahlblock 206 und der Akkumulationseinheiten 206.1 bis 206.3 in einem Akkumulationsblock 206 in Fig. 2 ist insofern keine Wiedergabe einer zwingend notwendigen strukturellen Gestaltung der Vorrichtung, sondern lediglich eine Implementierungsmöglickeit. Es können in alternativen Ausführungsformen die zu einer betreffenden Multiplikationsmethode gehörigen jeweiligen Auswahl- und Akkumulationseinheiten zusammen gruppiert sein

Alle Einheiten werden mit einem gemeinsamen Takt von einer hier nicht dargestellten Taktsignalquelle getrieben, was durch den Schaltungsblöcken seitlich von links zugeführte Taktleitung symbolisiert ist.

Die Auswahl der Multiplikationsmethode und entsprechende Ansteuerung der betreffenden Auswahl- und Akkumulationseinheiten wird durch eine Steuereinheit 208 geleistet, die ausgebildet ist, aus der Vielzahl paralleler Multiplikationseinheiten in Abhängigkeit von einem eingangsseitig anliegenden Zufallssignal eine Zufallsauswahl genau einer Multiplikationseinheit für die Durchführung der Multiplikation zu treffen.

Wenn die implementierten Multiplikationsmethoden eine unterschiedliche Aufteilung der Operanden verwenden, so dass die beiden *n*-Bit großen Faktoren in *ξⱼ mⱼ*-Bit große Segmente aufgeteilt werden, mit *mⱼ*=*n*/*ξⱼ*, ist das Benutzen der gleichen gemeinsamen Teilmultipliziereinheit für *m*-Bit große Operanden dann möglich, wenn für jede *j* gilt: *m*≥*mⱼ.*

### 2. Zufällige Permutation der Schritte des Ausführungsplans der seriellen Multiplikation

Die oben beschriebene serielle Implementierung einer ausgewählten Multiplikationsmethode folgt einem festen Ausführungsplan, der *N* Takte läuft, weil er aus *N* Schritten besteht. Diese Reihenfolge der Schritte - vom Schritt Nr. 1 bis zum Schritt Nr. *N* - ist durch Schrittzähler implementiert.

Der jeweils auszuführende Schritt des Ausführungsplans kann aber randomisiert taktweise gewählt werden. Hier sind mehrere Arten der Implementierung dieser Wahl möglich. Für die nachfolgende Beschreibung wird als Beispiel angenommen, dass *N*=9, dass also Schritte 1 bis 9 durchzuführen sind, und dass der oben beschriebene feste Ausführungsplan die folgende Reihenfolge der Schritte hat: 1-2-3-4-5-6-7-8-9

### Variante 1

Der erste Schritt des randomisierten Ausführungsplans kann zufällig aus der ganzen Menge der Ausführungs-Schritte {Schritt1, Schritt2, ... , Schritt9} gewählt und ausgeführt werden. Der so ausgewählte und ausgeführte Schritt wird in diesem Moment oder danach aus der Menge der noch durchzuführenden Ausführungs-Schritte ausgeschlossen, d.h. die Menge wird aktualisiert. Der nächste Schritt des randomisierten Akkumulationsplans kann zufällig aus dieser aktualisierten Menge der Ausführungs-Schritte ausgewählt und ausgeführt werden. Auf diese Weise bleiben wie bei der Variante mit festem Ausführungsplan immer noch *N*=9 Schritte für die Ausführung aller Schritte des Akkumulationsplans notwendig, d.h. auf diese Weise wird nur die Reihenfolge der Schritte des Ausführungsplans zufällig permutiert. Die Wahl der Daten, die in jedem konkreten Takt zu verarbeiten sind, ist aber zufällig und dadurch dem Angreifer unbekannt. Auf diese Weise wird jede Ausführung der Multiplikation individualisiert: welche Teile der Faktoren in welchem Takt verarbeitet wurden, ist jetzt randomisiert und dem Angreifer nicht mehr bekannt.

### Variante 2

Alle Schritte des randomisierten Akkumulationsplans können zufällig aus der ganzen Menge der Ausführungs-Schritte {Schritt1, Schritt2, ... , Schritt9} gewählt werden. Wenn der Schritt ist zum ersten Mal aus der Menge ausgewählt, wird er ausgeführt. Mehrfache Auswahl des gleichen Schrittes kann eine mehrfache Verarbeitung der zu multiplizierenden Operanden oder aber von Zufallsdaten initiieren. Das Ergebnis solcher Verarbeitung nach einer wiederholten Auswahl eines betreffenden Schrittes wird in jedem Falle verworfen. Ein zusätzlicher Zähler der tatsächlich ausgeführten Schritte des Ausführungsplans ist in dieser Variante notwendig, was den Hardwareaufwand erhöht. Als Nachteil können auch ein erhöhter Energieverbrauch und eine längere Laufzeit der Multiplikation genannt werden, weil in diesem Fall die Anzahl der Ausführungs-Takte mit hoher Wahrscheinlichkeit größer ist als im Falle der zuvor beschriebenen Varianten (≥ *N*). Aus Sicht der Sicherheit hat aber eine solche Implementierung große Vorteile: die Laufzeit jeder Polynom-Multiplikation wird randomisiert; welche Inputs - reale oder zufällige - im aktuellen Takt verarbeitet wurden, wird dem Angreifer nicht bekannt.

### 3. Randomisierte Aktivierung (mindestens) eines individualisierten Teil-Multiplizierers (taktweise)

Aktuell existieren mehr als zehn unterschiedliche Multiplikationsmethoden, die sich als Multiplikationsformeln darstellen lassen. Jede dieser Formeln hat ihre eigene Zerlegung der Faktoren in Teile (oder Segmente), eine individuelle Anzahl von Teilprodukten - der jeweils nur ein Segment langen - Operanden, und eine eigene Anzahl von Additionen der Teilprodukte - mit anderen Worten: jede Multiplikations-Methode hat ihre eigene Komplexität, die sich in einer Hardwareimplementierung in einer individuellen Anzahl und Verschaltung von Gattern niederschlägt.

Darüber hinaus können bei der Berechnung eines Produkts unterschiedliche Multiplikations-Methoden miteinander kombiniert werden. Jede dieser Kombinationen hat wiederum ihre eigene Komplexität. Die Anzahl der möglichen Kombinationen ist daher sehr groß. Diese Tatsache wird in Ausführungsbeispielen der vorliegenden Erfindung für eine besondere Struktur der Teilmultipliziereinheit (TM-Einheit) genutzt werden: Die Teilmultipliziereinheit kann mehrere (interne) Teilmultiplizierer beinhalten, die jeweils eine Multiplikationsmethode aus einer Anzahl unterschiedlicher Multiplikationsmethoden zur Berechnung eines Teilprodukts implementieren. Wenn die Teilmultiplizierereinheit eine Anzahl der internen Teilmultiplizierer hat, die größer ist als die für die Berechnung des Teilproduktes notwendig, können die restlichen Teilmultiplizierer in diesem Taktzyklus entweder deaktiviert werden, um Energie zu sparen, oder zufällige Daten verarbeiten, um auf diese Weise Rauschen zu generieren, was den Informationsgehalt einer Power Trace reduziert und dadurch eine Power Analyse wie die DPA erschwert.

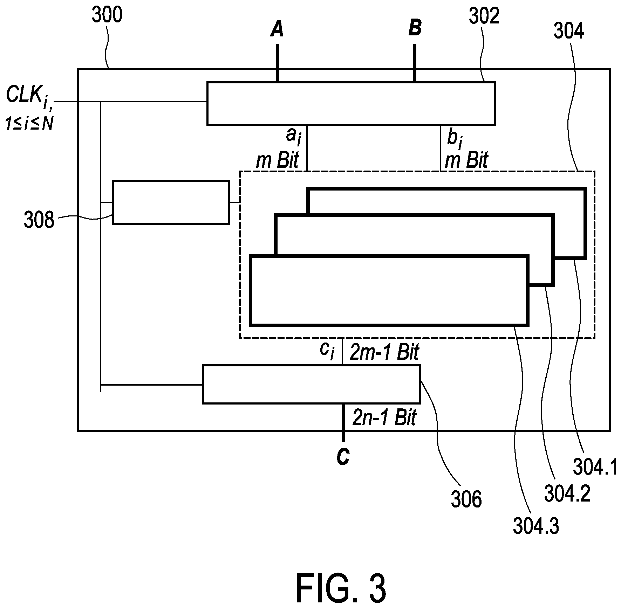

Fig. 3 zeigt ein Blockschaltbild einer weiteren Implementierung einer Vorrichtung 300 zur Multiplikation, mit einer festgelegten Multiplikationsmethode für die serielle Multiplikation und mit mehreren Teilmultipliziereinheiten, die das Teil-Produkt in einem Schritt berechnen können, wobei alle Teilmultipliziereinheiten eine eigene - individualisierte - Struktur haben. Fig. 3 zeigt als Beispiel eine Implementierung, die ein Produkt der Elemente aus GF(*2ⁿ*) ohne Reduktion berechnet und drei individualisierte Teilmultipliziereinheiten aufweist, in schematischer Darstellung.

Grundsätzlich ähnelt die Struktur der Vorrichtung 300 der in Fig. 1 gezeigten Implementierung. Im Vergleich zu Fig.1 beinhaltet das Design jedoch einen Teilmultipliziererblock 304, in diesem Beispiel mit zwei zusätzlichen, also insgesamt drei Teilmultipliziereinheiten 304.1 bis 304.3. Die Anzahl der Teilmultipliziereinheiten ist beim Schaltungsentwurf nach Belieben festlegbar. Je mehr Teilmultipliziereinheiten verwendet werden, desto größer ist der Effekt zum Schutz gegen Angriffe. Andererseits steigen Flächen- und Energiebedarf an. Die Steuereinheit 308 dient zur taktweise randomisierten Aktivierung jeweils einer der Teilmultipliziereinheiten 304.1 bis 304.3. Mit jedem Takt muss daher nur eine dieser Teilmultipliziereinheiten aktiviert werden, d.h. sie wird die Inputs *aᵢ* und *bᵢ* verarbeiten. Da die Komplexität aller drei Teilmultipliziereinheiten 304.1 bis 304.3 unterschiedlich - also individuell - ist, wird eine Power Trace, die die Quelle der SCA-Leakage ist, nicht nur von den verarbeiteten Inputs und von dem verwendeten Schlüssel, sondern auch von der Komplexität der in einem Takt jeweils aktiven Teilmultipliziereinheiten abhängig. Die taktweise randomisierte Aktivierung der Teilmultiplizierereinheiten hat eine komplexe Auswirkung auf die Form einer gemessenen Power Trace, was die Power Analyse wesentlich erschweren kann.

Es muss nicht jeweils genau eine Teilmultiplizierereinheit aktiviert werden. In Varianten werden mehrere oder sogar alle aktiviert.

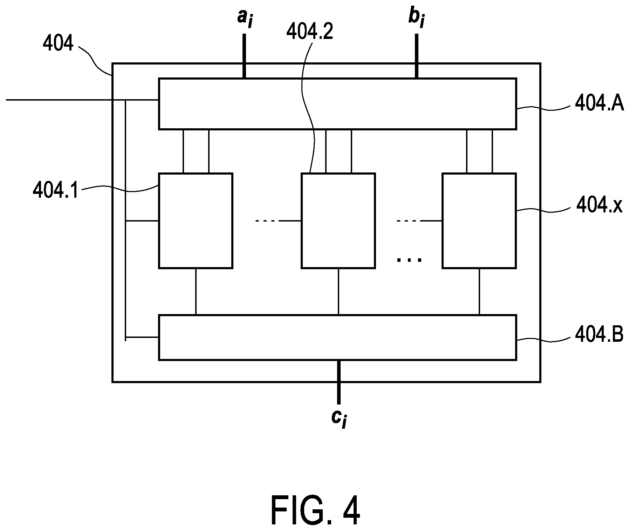

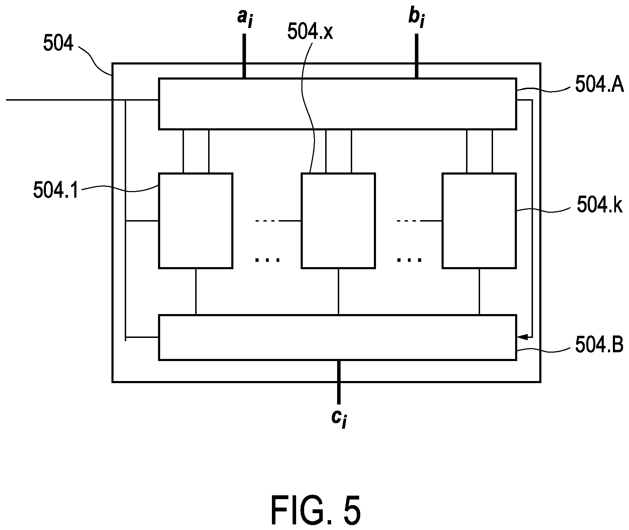

Nachfolgend wird zur Erläuterung weiterer Varianten parallel auf die Figuren 4 und 5 Bezug genommen. Fig. 4 zeigt ein Blockschaltbild einer Teilmultipliziereinheit, deren aktive Struktur dynamisch - in jedem Schritt eines Multiplikationsplans - individualisierbar ist. Fig. 5 zeigt ein Blockschaltbild einer Variante Teilmultipliziereinheit aus Fig. 4.

Die Teilmultipliziereinheit 404 der Fig. 4 enthält eine Vielzahl x parallelgeschalteter (interner) Teilmultiplizierer 404.1, 404.2 bis 404.x, die zusammen zur Bestimmung eines jeweiligen Teilprodukts dienen, wobei die Schaltung mindestens eines dieser Teilmultiplizierer individualisiert ist, d.h. sie unterscheidet sich von den Schaltungen anderer Teilmultiplizierer. Eine Auswahleinheit 404.A wählt von den zugeführten Faktoren *aᵢ* und *bᵢ* nach einem vorgegebenen Auswahlplan die zu multiplizierenden Teile für Teilmultiplizierer aus und wählt randomisiert, welche Teile von welchen der Teilmultiplizierer verarbeitet werden, d.h. führt den Teilmultiplizierern die jeweils ausgewählten Teile randomisiert zu. Eine Akkumulationseinheit 404.B ist in der Lage zu erkennen, wie die von den Teilmultiplizierern ermittelten Produkte akkumuliert werden sollen, um das korrekte Teilprodukt zu ermitteln.

Die Teilmultipliziereinheit 504 der Fig. 5 enthält als Variante der Ausführung aus Fig. 4 zusätzlich zu einer Anzahl *x* erforderlicher Teilmultiplizierer 504.1 bis 504.x eine Anzahl (*k*-*x*) zusätzliche (sozusagen überflüssige) Teilmultiplizierer, von denen nur der Teilmultiplizierer 504.k dargestellt ist. Es ist mindestens 1 zusätzlicher Teilmultiplizierer vorgesehen, so dass also *k* mindestens *(x*+*1)* beträgt, wobei mindestens einer dieser *k* Teilmultiplizierer individualisiert ist, d.h. eine eigene, von anderen Teilmultiplizierern unterschiedliche Struktur und Schaltung hat. Es stehen für jeden Schritt also anstatt einer Anzahl *x* für die Ermittlung eines jeweiligen Teilprodukts notwendiger innerer Teilmultiplizierer weitere (*k*-*x*) Teilmultiplizierer zur Verfügung, so dass insgesamt die *k* Teilmultiplizierer verfügbar sind, von denen aber jeweils nur *x* zufällig gewählte Teilmultiplizierer in jedem Takt aktiviert werden. Welche Teilmultiplizierer (randomisiert) aktiviert werden, bestimmt die Auswahleinheit 504.A. Steuerinformation über die jeweils getroffene Auswahl empfängt die Akkumulationseinheit 504.B von der Auswahleinheit 504.A.

In einer anderen Ausführung kann jeder der verfügbaren Teilmultiplizierer 504.1 bis 504.k nach einer eigenen Kombination der Multiplikationsmethoden, d.h. individualisiert implementiert werden. In solcher Ausführung bestehen also alle Teilmultiplizierer 504.1 bis 504.k aus unterschiedlichen (individualisierten) Anzahlen von Gattern und haben unterschiedliche (individualisierte) Struktur, Komplexität und Schaltung. Die elektromagnetische (EM)-Strahlung und der Energieverbrauch während der Teilprodukt-Berechnung werden also nicht nur von Teilmultiplizierer-Eingaben sondern auch von den jeweils (auf zufällige Weise) aktivierten x Teilmultiplizierern abhängig.

Dieser Effekt wird mit etwas geringerer Ausprägung auch in einer anderen Variante erreicht, in der nicht alle Teilmultiplizierer eine eigene individualisierte Multiplikationsmethode implementieren und somit unterschiedliche Komplexität haben, sondern nur ein Teil - mindestens einer der aktivierten Teilmultiplizierer - in der beschriebenen Weise individualisiert ist.

Eine weitere Variante der Ausführung aus Fig. 4, die die Form der gemessenen Power Trace von der Struktur des Teil-Multiplizierers dynamisch beeinflusst, implementiert eine randomisierte Verteilung der Eingabedaten an die nur x notwendigen individualisierte Teilmultiplizierer 404.1 bis 404.x (siehe Fig. 4). In dieser Variante ist in der Auswahleinheit 404.A und der Akkumulationseinheit 404.B eine zusätzlicher Steuerung (nicht dargestellt) implementiert, die trotz der zufälligen Verteilung der Eingabedaten auf die Teilmultiplizierer 404.1 bis 404.x die Ausgaben von den Teilmultiplizierern so akkumuliert, dass das Teilprodukt, d.h. die Ausgabe der Teilmultiplizierereinheit, korrekt wird.

Varianten der verschiedenen beschriebenen Aspekte und Ausführungsformen der Erfindung sind möglich.

Eine Kombination der oben beschriebenen Maßnahmen kann für die Implementierung eines hochflexiblen Multiplizierers benutzt werden. Mit anderen Worten, unterschiedliche Chips bieten zwar nach außen hin eine identische Funktionalität, sind in ihren Power Traces jedoch sogar bei der Verarbeitung der gleichen Inputs, sogar bei der wiederholten Messungen mit den gleichen Inputs, individualisiert. Dadurch werden die SCA-Angriffe deutlich erschwert.

Einer zufälligen Auswahl einer Multiplikationsmethode im Wesentlichen gleichwertig ist in anderen Ausführungsformen eine nicht im buchstäblich zufällige, jedoch hinreichend kompliziert, also von außen her nur mit unwirtschaftlich hohem Aufwand nachvollziehbar gestaltete Auswahlmethode. Beispiele solcher alternativer Auswahlmethoden sind an sich bekannt und werden auch als quasizufällige Auswahlmethoden bezeichnet.

Zusammenfassend stellt die vorliegende Erfindung eine Vorrichtung zur Multiplikation zweier Bitfolgen bereit. Eine Steuereinheit wählt aus einer Vielzahl paralleler Multiplikationseinheiten in Abhängigkeit von einem Zufallssignal genau eine Multiplikationseinheit aus und aktiviert diese. Eine von allen Multiplikationseinheiten gemeinsam genutzte Teilmultipliziereinheit empfängt und multipliziert von der jeweils aktivierten Multiplikationseinheit gebildete Operanden miteinander. Jede der Multiplikationseinheiten implementiert eine andere Multiplikationsmethode zur Durchführung einer Multiplikation und weist dafür eine entsprechend der implementierten Multiplikationsmethode ausgebildete Auswahleinheit und eine entsprechend der implementierten Multiplikationsmethode ausgebildete Akkumulationseinheit auf. Die jeweilige Auswahleinheit wählt Schritt für Schritt Segmente der zu multiplizierenden Bitfolgen nach einem der jeweiligen Multiplikationsmethode angepassten Auswahlplan aus, bildet aus einem oder mehreren Segmenten Operanden und gibt sie an die Teilmultipliziereinheit aus. Die jeweilige Akkumulationseinheit empfängt von der Teilmultipliziereinheit ausgegebene Teilprodukte Schritt für Schritt, akkumuliert sie nach einem entsprechend der implementierten Multiplikationsmethode angepassten, zum Auswahlplan passenden Akkumulationsplan und gibt nach Abschluss der Akkumulation das so ermittelte Produkt der Bitfolgen aus.

## Patentansprüche

1. Vorrichtung zur Multiplikation zweier Bitfolgen, umfassend
- eine Steuereinheit, die ausgebildet ist, aus einer Vielzahl paralleler Multiplikationseinheiten in Abhängigkeit von einem eingangsseitig anliegenden Zufallssignal genau eine Multiplikationseinheit für die Durchführung der Multiplikation auszuwählen und zu aktivieren,
- eine von allen Multiplikationseinheiten gemeinsam genutzte Teilmultipliziereinheit, die ausgebildet ist, von der jeweils aktivierten Multiplikationseinheit gebildete Operanden zu empfangen und die empfangenen Operanden miteinander zu multiplizieren, wobei
- jede der Multiplikationseinheiten eine andere Multiplikationsmethode zur Durchführung einer Multiplikation implementiert und dafür eine entsprechend der implementierten Multiplikationsmethode ausgebildete Auswahleinheit und eine entsprechend der implementierten Multiplikationsmethode ausgebildete Akkumulationseinheit aufweist, wobei
- die jeweilige Auswahleinheit ausgebildet ist, Schritt für Schritt Segmente der zu multiplizierenden Bitfolgen nach einem der jeweiligen Multiplikationsmethode angepassten Auswahlplan auszuwählen, aus einem oder mehreren Segmenten Operanden zu bilden und an die Teilmultipliziereinheit auszugeben, und wobei
- die jeweilige Akkumulationseinheit ausgebildet ist, von der Teilmultipliziereinheit ausgegebene Teilprodukte Schritt für Schritt zu empfangen, nach einem entsprechend der implementierten Multiplikationsmethode angepassten, zum Auswahlplan passenden Akkumulationsplan zu akkumulieren und nach Abschluss der Akkumulation das so ermittelte Produkt der Bitfolgen auszugeben.

2. Vorrichtung nach Anspruch 1, bei der die jeweilige Multiplikationseinheit zusätzlich ausgebildet ist, eine Reihenfolge von im jeweiligen Auswahlplan und im jeweiligen Akkumulationsplan vorgegebenen Auswahlschritten und Akkumulationsschritten zufällig zu permutieren.

3. Vorrichtung nach einem der vorstehenden Ansprüche, bei der
- die Teilmultipliziereinheit eine Vielzahl interner Teilmultiplizierer aufweist und ausgebildet ist, in einem jeweiligen Schritt aus den zugeführten Operanden Teil-Operanden mit vorbestimmter Bitanzahl zu bilden und auf eine vorbestimmte Anzahl der Teilmultiplizierer zu verteilen sowie anhand der Ausgaben der vorbestimmten Anzahl der Teilmultiplizierer ein jeweiliges Teilprodukt zu ermitteln, wobei
- die Teilmultipliziereinheit für die Ermittlung des jeweiligen Teilproduktes eine Gesamtanzahl von Teilmultiplizierern aufweist, die größer ist als die vorbestimmte, für die Ermittlung des jeweiligen Teilproduktes notwendige Anzahl der Teilmultiplizierer, und die Gesamtanzahl der Teilmultiplizierer mindestens zwei Gruppen von Teilmultiplizierern umfasst, die gruppenweise unterschiedliche Multiplikationsmethoden implementieren, und wobei
- die Teilmultipliziereinheit ausgebildet ist, die vorbestimmte Anzahl aktiver Teilmultiplizierer aus der Gesamtanzahl der Teilmultiplizierer mit der Maßgabe zufällig auszuwählen, dass mindestens einer der Teilmultiplizierer zu einer anderen Gruppe von Teilmultiplizierern gehört als die anderen ausgewählten Teilmultiplizierer, und die Teil-Operanden nur auf die zufällig ausgewählten Teilmultiplizierer zu verteilen.

4. Vorrichtung nach Anspruch 1 oder 2, bei der
- die Teilmultipliziereinheit eine Eingangseinheit aufweist, die ausgebildet ist, in einem Schritt aus den ihr zugeführten Operanden Teil-Operanden mit vorbestimmter Bitanzahl zu bilden und die Teil-Operanden in zufälliger Weise einer vorbestimmten Anzahl von in der Teilmultipliziereinheit enthaltenen Teilmultiplizierern zuzuordnen und auszugeben, sowie Steuerinformation auszugeben, welche die vorgenommene Zuordnung der Teil-Operanden auf die Teilmultiplizierer anzeigt, wobei
- die Teilmultipliziereinheit nicht mehr Teilmultiplizierer als eine vorbestimmte, für die Teil-Multiplikation notwendige Anzahl der Teilmultiplizierer hat,
- eine Gesamtanzahl der Teilmultiplizierer sich auf mindestens zwei Gruppen mit jeweils mindestens einem Teilmultiplizierer verteilt und die Teilmultiplizierer jeder der Gruppen eine andere Multiplikationsmethode implementieren als die Teilmultiplizierer der anderen Gruppen, und wobei
- die Teilmultipliziereinheit eine Ausgangseinheit aufweist, die die Steuerinformation empfängt und ausgebildet ist, in Abhängigkeit von der Steuerinformation Ausgaben von den jeweiligen Teilmultiplizierern zu empfangen, das jeweilige Teilprodukt zu ermitteln und auszugeben.

5. Vorrichtung zur Multiplikation zweier Bitfolgen, umfassend
- eine Teilmultipliziereinheit, die ausgebildet ist, Operanden zu empfangen und in einen Schritt miteinander zu multiplizieren
- eine Auswahleinheit, die ausgebildet ist, Segmente der zu multiplizierenden Bitfolgen nach einem Auswahlplan auszuwählen, aus einem oder mehreren Segmenten die Operanden zu bilden und an die Teilmultipliziereinheit auszugeben,
- eine Akkumulationseinheit, die ausgebildet ist, von der Teilmultipliziereinheit ausgegebene Teilprodukte zu empfangen, nach einem zum Auswahlplan passenden Akkumulationsplan zu akkumulieren und nach Abschluss der Akkumulation das so ermittelte Produkt der Bitfolgen auszugeben, wobei
- die Auswahleinheit und die Akkumulationseinheit ausgebildet sind, eine Reihenfolge von im jeweiligen Auswahlplan und im jeweiligen Akkumulationsplan vorgegebenen Auswahlschritten und Akkumulationsschritten zufällig zu permutieren; und wobei
- die Teilmultipliziereinheit eine Vielzahl Teilmultiplizierer aufweist und ausgebildet ist, aus den in einem Schritt zugeführten Operanden Teil-Operanden mit vorbestimmter Bitanzahl zu bilden und die Teil-Operanden auf eine vorbestimmte Anzahl aktiver Teilmultiplizierer aus der Vielzahl der Teilmultiplizierer zu verteilen sowie anhand der Ausgaben der Teilmultiplizierer ein jeweiliges Teilprodukt zu ermitteln, wobei
a) entweder
- die Teilmultipliziereinheit eine Gesamtanzahl von Teilmultiplizierern aufweist, die größer ist als die vorbestimmte, für die Ermittlung des Teilproduktes notwendige Anzahl der Teilmultiplizierer, und die Gesamtanzahl der Teilmultiplizierer mindestens zwei Gruppen von Teilmultiplizierern umfasst, die gruppenweise unterschiedliche Multiplikationsmethoden implementieren,
- die Teilmultipliziereinheit ausgebildet ist, die vorbestimmte Anzahl aktiver Teilmultiplizierer aus der Gesamtanzahl der Teilmultiplizierer mit der Maßgabe zufällig auszuwählen, dass mindestens einer der Teilmultiplizierer zu einer anderen Gruppe von Teilmultiplizierern gehört als die anderen ausgewählten Teilmultiplizierer, und die Teil-Operanden nur auf die zufällig ausgewählten Teilmultiplizierer zu verteilen,
b) oder
- die Teilmultipliziereinheit eine Eingangseinheit aufweist, die ausgebildet ist, in einem Schritt aus den ihr zugeführten Operanden Teil-Operanden mit vorbestimmter Bitanzahl zu bilden und die Teil-Operanden in zufälliger Weise einer vorbestimmten Anzahl von Teilmultiplizierern zuzuordnen und auszugeben, sowie Steuerinformation auszugeben, welche die vorgenommene Zuordnung der Teil-Operanden auf die Teilmultiplizierer anzeigt, wobei
- die Teilmultipliziereinheit nicht mehr Teilmultiplizierer als eine vorbestimmte, für die Teil-Multiplikation notwendige Anzahl der Teilmultiplizierer hat,
- eine Gesamtanzahl der Teilmultiplizierer sich auf mindestens zwei Gruppen mit jeweils mindestens einem Teilmultiplizierer verteilt und die Teilmultiplizierer jeder der Gruppen eine andere Multiplikationsmethode implementieren als die Teilmultiplizierer der anderen Gruppen, und wobei
- die Teilmultipliziereinheit eine Ausgangseinheit aufweist, die die Steuerinformation empfängt und ausgebildet ist, in Abhängigkeit von der Steuerinformation Ausgaben von den jeweiligen Teilmultiplizierern zu empfangen und das jeweilige Teilprodukt zu ermitteln und auszugeben.

6. Vorrichtung zur Multiplikation zweier Bitfolgen, umfassend
- eine Auswahleinheit, die ausgebildet ist, Schritt für Schritt Segmente der zu multiplizierenden Bitfolgen nach einem Auswahlplan auszuwählen, aus den ausgewählten Segmenten die Eingaben für die Teilmultipliziereinheit zu gestalten und an die Teilmultipliziereinheit auszugeben,
- eine Teilmultipliziereinheit, die ausgebildet ist, die zugeführte Operanden zu empfangen und in einen Schritt miteinander zu multiplizieren,
- eine Akkumulationseinheit, die ausgebildet ist, von der Teilmultipliziereinheit ausgegebene Teilprodukte Schritt für Schritt zu empfangen, nach einem zum Auswahlplan passenden Akkumulationsplan zu akkumulieren und nach Abschluss der Akkumulation das so ermittelte Produkt der Bitfolgen auszugeben, wobei
- die Teilmultipliziereinheit eine Vielzahl Teilmultiplizierer aufweist und ausgebildet ist, aus den in einem Schritt zugeführten Operanden Teil-Operanden mit vorbestimmter Bitanzahl zu bilden und die Teil-Operanden auf eine vorbestimmte Anzahl aktiver Teilmultiplizierer aus der Vielzahl der Teilmultiplizierer zu verteilen sowie anhand der Ausgaben der Teilmultiplizierer ein jeweiliges Teilprodukt zu ermitteln, wobei
a) entweder
- die Teilmultipliziereinheit eine Gesamtanzahl von Teilmultiplizierern aufweist, die größer ist als die vorbestimmte, für die Ermittlung des jeweiligen Teilproduktes notwendige Anzahl der Teilmultiplizierer, und die Gesamtanzahl der Teilmultiplizierer mindestens zwei Gruppen von Teilmultiplizierern umfasst, die gruppenweise unterschiedliche Multiplikationsmethoden implementieren, und
- die Teilmultipliziereinheit ausgebildet ist, die vorbestimmte Anzahl aktiver Teilmultiplizierer aus der Gesamtanzahl der Teilmultiplizierer mit der Maßgabe zufällig auszuwählen, dass mindestens einer der Teilmultiplizierer zu einer anderen Gruppe von Teilmultiplizierern gehört als die anderen ausgewählten Teilmultiplizierer, und die Teil-Operanden nur auf die zufällig ausgewählten Teilmultiplizierer zu verteilen,
b) oder
- die Teilmultipliziereinheit eine Eingangseinheit aufweist, die ausgebildet ist, in einem Schritt aus den ihr zugeführten Operanden Teil-Operanden mit vorbestimmter Bitanzahl zu bilden und die Teil-Operanden in zufälliger Weise einer vorbestimmten Anzahl von Teilmultiplizierern zuzuordnen und Steuerinformation auszugeben, welche die vorgenommene Zuordnung der Teil-Operanden auf die Teilmultiplizierer anzeigt, wobei
- die Teilmultipliziereinheit nicht mehr Teilmultiplizierer als eine vorbestimmte, für die Teil-Multiplikation notwendige Anzahl der Teilmultiplizierer hat,
- eine Gesamtanzahl der Teilmultiplizierer sich auf mindestens zwei Gruppen mit jeweils mindestens einem Teilmultiplizierer verteilt und die Teilmultiplizierer jeder der Gruppen eine andere Multiplikationsmethode implementieren als die Teilmultiplizierer der anderen Gruppen, und wobei
- die Teilmultipliziereinheit eine Ausgangseinheit aufweist, die die Steuerinformation empfängt und ausgebildet ist, in Abhängigkeit von der Steuerinformation Ausgaben von den jeweiligen Teilmultiplizierern zu empfangen und anhand der Ausgaben das jeweilige Teilprodukt zu ermitteln und auszugeben.

7. Elektronische Schaltung mit einer Vorrichtung nach mindestens einem der Ansprüche 1 bis 6.

8. Kryptographische Vorrichtung zur Verschlüsselung oder Entschlüsselung binär kodierter Information, umfassend eine Vorrichtung oder eine elektronische Schaltung nach mindestens einem der Ansprüche 1 bis 7.

9. Hardwareimplementiertes Verfahren zur Multiplikation zweier Bitfolgen, umfassend
- zufälliges Auswählen und Aktivieren genau einer Multiplikationseinheit aus einer Vielzahl paralleler Multiplikationseinheiten für die Durchführung der Multiplikation, wobei
- jede der Multiplikationseinheiten eine andere Multiplikationsmethode zur Durchführung der Multiplikation implementiert und dafür eine entsprechend der implementierten Multiplikationsmethode ausgebildete Auswahleinheit und eine entsprechend der implementierten Multiplikationsmethode ausgebildete Akkumulationseinheit aufweist, wobei
- die Auswahleinheit der jeweils aktivierten Multiplikationseinheit Schritt für Schritt Segmente der zu multiplizierenden Bitfolgen nach einem der jeweiligen Multiplikationsmethode angepassten Auswahlplan auswählt, aus den ausgewählten Segmenten Operanden für eine Teilmultiplikation bildet und an eine Teilmultipliziereinheit ausgibt,
- alle Multiplikationseinheiten gemeinsam genau eine Teilmultipliziereinheit nutzen, die aus einem oder mehreren Segmenten gebildete Operanden von der jeweils aktivierten Multiplikationseinheit empfängt und miteinander multipliziert, wobei
- die Akkumulationseinheit der aktivierten Multiplikationseinheit von der Teilmultipliziereinheit ausgegebene Teilprodukte Schritt für Schritt empfängt, nach einem entsprechend der implementierten Multiplikationsmethode angepassten, zum Auswahlplan passenden Akkumulationsplan akkumuliert und nach Abschluss der Akkumulation das so ermittelte Produkt der Bitfolgen ausgibt.

10. Hardwareimplementiertes Verfahren zur Multiplikation zweier Bitfolgen, umfassend
- Auswählen von Segmenten der zu multiplizierenden Bitfolgen und Bilden der Operanden für Teil-Multiplikation Schritt für Schritt nach einem Auswahlplan,
- Empfangen und Multiplizieren der gebildeten Operanden in einem Schritt in einer Teilmultipliziereinheit zur Bildung von Teilprodukten,
- Empfangen und Akkumulieren der Teilprodukte nach einem zum Auswahlplan passenden Akkumulationsplan und Ausgeben des so ermittelten Produkts der Bitfolgen nach Abschluss der Akkumulation, wobei
a) entweder
- zur Multiplikation der empfangenen Operanden in einer Teilmultiplizierereinheit von den Operanden Teil-Operanden mit vorbestimmter Bitanzahl gebildet werden und auf eine vorbestimmte Anzahl Teilmultiplizierer der Teilmultipliziereinheit verteilt werden sowie anhand der Ausgaben der Teilmultiplizierer ein jeweiliges Teilprodukt ermittelt wird, wobei
- die Teilmultipliziereinheit eine Gesamtanzahl von Teilmultiplizierern aufweist, die größer ist als die vorbestimmte, für die Ermittlung des jeweiligen Teilproduktes notwendige Anzahl der Teilmultiplizierer, und die Gesamtanzahl der Teilmultiplizierer mindestens zwei Gruppen von Teilmultiplizierern umfasst, die gruppenweise unterschiedliche Multiplikationsmethoden implementieren, wobei
- die Teilmultipliziereinheit die vorbestimmte Anzahl aktiver Teilmultiplizierer aus der Gesamtanzahl der Teilmultiplizierer mit der Maßgabe zufällig auswählt, dass mindestens einer der Teilmultiplizierer zu einer anderen Gruppe von Teilmultiplizierern gehört als die anderen ausgewählten Teilmultiplizierer, und die Teil-Operanden nur auf die zufällig ausgewählten Teilmultiplizierer verteilt,
b) oder
- die Teilmultipliziereinheit aus den ihr zugeführten Operanden Teil-Operanden mit vorbestimmter Bitanzahl bildet und die Teil-Operanden in zufälliger Weise einer vorbestimmten Anzahl von Teilmultiplizierern zuordnet und ausgibt, sowie Steuerinformation ausgibt, welche die vorgenommene Zuordnung der Teil-Operanden auf die Teilmultiplizierer anzeigt, wobei
- die Teilmultipliziereinheit nicht mehr Teilmultiplizierer als eine vorbestimmte, für die Teil-Multiplikation notwendige Anzahl der Teilmultiplizierer hat,
- eine Gesamtanzahl der Teilmultiplizierer der Teilmultipliziereinheit sich auf mindestens zwei Gruppen mit jeweils mindestens einem Teilmultiplizierer verteilt und die Teilmultiplizierer jeder der Gruppen eine andere Multiplikationsmethode implementieren als die Teilmultiplizierer der anderen Gruppen, und wobei
- die Teilmultipliziereinheit in Abhängigkeit von der Steuerinformation von den jeweils darin angezeigten Teilmultiplizierern Ausgaben empfängt, das jeweilige Teilprodukt ermittelt und ausgibt.

## Claims

1. Device for multiplying two-bit sequences, comprising
- a control unit that is configured to select and activate exactly one multiplication unit for performing the multiplication from a plurality of parallel multiplication units as a function of a random signal applied to the input side,
- a sub-multiplying unit shared by all multiplication units, which is configured to receive operands formed by the respectively activated multiplication unit and to multiply the received operands with one another, wherein
- each of the multiplication units implements a different multiplication method for performing a multiplication and for this purpose has a selection unit configured according to the implemented multiplication method and an accumulation unit configured according to the implemented multiplication method, wherein
- the respective selection unit is configured to select, step by step, segments of the bit sequences to be multiplied according to a selection plan adapted to the respective multiplication method, to form operands from one or several segments and to output said operands to the sub-multiplying unit, and wherein
- the respective accumulation unit is configured to receive sub-products output from the sub-multiplying unit step by step, to accumulate said sub-products according to an accumulation plan corresponding to the implemented multiplication method and matching the selection plan, and to output the thus determined product of the bit sequences after completion of the accumulation.

2. Device according to claim 1, in which the respective multiplication unit is additionally configured to randomly permute a sequence of selection steps and accumulation steps predetermined in the respective selection plan and in the respective accumulation plan.

3. Device according to any one of the preceding claims, in which
- the sub-multiplying unit has a plurality of internal sub-multipliers and is configured to form sub-operands with a predetermined number of bits in a respective step from the supplied operands and distribute said sub-operands to a predetermined number of sub-multipliers and to determine a respective sub-product based on the outputs of the predetermined number of sub-multipliers, wherein
- the sub-multiplying unit for the determination of the respective sub-product has a total number of sub-multipliers that is greater than the predetermined number of sub-multipliers necessary for the determination of the respective sub-product, and the total number of sub-multipliers comprises at least two groups of sub-multipliers, which, group-wise, implement different multiplication methods, and wherein
- the sub-multiplying unit is configured to randomly select the predetermined number of active sub-multipliers from the total number of sub-multipliers, provided that at least one of the sub-multipliers belongs to a different group of sub-multipliers than the other selected sub-multipliers, and only to distribute the sub-operands to the randomly selected sub-multipliers,

4. Device according to claim 1 or 2, in which
- the sub-multiplying unit has an input unit which is configured to form operands with a predetermined number of bits, in one step, from the operands supplied to it and to assign and to output the sub-operands in a random manner to a predetermined number of sub-multipliers contained in the sub-multiplying unit, as well as to output control information indicating the assignment of the sub-operands to the sub-multipliers, wherein
- the sub-multiplying unit has no more sub-multipliers than a predetermined number of sub-multipliers necessary for the sub-multiplying,
- a total number of sub-multipliers is distributed among at least two groups each having at least one sub-multiplier, and the sub-multipliers of each of the groups implement a multiplication method different from the sub-multipliers of the other groups, and wherein
- the sub-multiplying unit has an output unit that receives the control information and that is configured to receive outputs from the respective sub-multipliers as a function of the control information, to determine and output the respective sub-product.

5. Device for multiplying two-bit sequences, comprising
- a sub-multiplying unit configured to receive and multiply operands in one step
- a selection unit configured to select segments of the bit sequences to be multiplied according to a selection plan, to form the operands from one or several segments and output them to the sub-multiplying unit,
- an accumulation unit configured to receive sub-products output from the sub-multiplying unit, to accumulate said sub-products according to an accumulation plan matching the selection plan, and to output the thus determined product of the bit sequences after completion of the accumulation, wherein
- the selection unit and the accumulation unit are configured to randomly permute a sequence of selection steps and accumulation steps specified in the respective selection plan and in the respective accumulation plan, and wherein
- the sub-multiplying unit has a plurality of sub-multipliers and is configured to form sub-operands with a predetermined number of bits from the operands supplied in one step and to distribute the sub-operands to a predetermined number of active sub-multipliers from the plurality of sub-multipliers and to determine a respective sub-product based on the outputs of the sub-multipliers, wherein
a) either
- the sub-multiplying unit has a total number of sub-multipliers which is greater than the predetermined number of sub-multipliers necessary for the determination of the sub-product, and the total number of sub-multipliers comprises at least two sub-multiplier groups that, group-wise, implement different multiplication methods,
- the sub-multiplying unit is configured to randomly select the predetermined number of active sub-multipliers from the total number of sub-multipliers, provided that at least one of the sub-multipliers belongs to a different group of sub-multipliers than the other selected sub-multipliers, and only to distribute the sub-operands to the randomly selected sub-multipliers,
b) or
- the sub-multiplying unit has an input unit which is configured to form sub-operands with a predetermined number of bits, in one step, from the operands supplied to it and to assign and to output the sub-operands in a random manner to a predetermined number of sub-multipliers, as well as to output control information indicating the assignment of the sub-operands to the sub-multipliers, wherein
- the sub-multiplying unit has no more sub-multipliers than a predetermined number of sub-multipliers necessary for the sub-multiplication,
- a total number of sub-multipliers is distributed to at least two groups each having at least one sub-multiplier, and the sub-multipliers of each of the groups implement a multiplication method different from the sub-multipliers of the other groups, and wherein
- the sub-multiplying unit has an output unit that receives the control information and that is configured to receive outputs from the respective sub-multipliers as a function of the control information, and to determine and output the respective sub-product.

6. Device for multiplying two-bit sequences, comprising
- a selection unit that is configured to select, step by step, segments of the bit sequences to be multiplied according to a selection plan, to create the inputs for the sub-multiplying unit from the selected segments and to output said inputs to the sub-multiplying unit,
- a sub-multiplying unit configured to receive and multiply the supplied operands in one step,
- an accumulation unit configured to receive, step by step, sub-products output from the sub-multiplying unit, to accumulate said sub-products according to an accumulation plan matching the selection plan, and to output the thus determined product of the bit sequences after completion of the accumulation, wherein
- the sub-multiplying unit has a plurality of sub-multipliers and is configured to form sub-operands with a predetermined number of bits from the operands supplied in one step and to distribute the sub-operands to a predetermined number of active sub-multipliers from the plurality of sub-multipliers and to determine a respective sub-product based on the outputs of the sub-multipliers, wherein
a) either
- the sub-multiplying unit has a total number of sub-multipliers which is greater than the predetermined number of sub-multipliers necessary for the determination of the respective sub-product, and the total number of sub-multipliers comprises at least two sub-multiplier groups that, group-wise, implement different multiplication methods, and
- the sub-multiplying unit is configured to randomly select the predetermined number of active sub-multipliers from the total number of sub-multipliers, provided that at least one of the sub-multipliers belongs to a different group of sub-multipliers than the other selected sub-multipliers, and only to distribute the sub-operands to the randomly selected sub-multipliers,
b) or
- the sub-multiplying unit has an input unit which is configured to form sub-operands with a predetermined number of bits, in one step, from the operands supplied to it and to assign the sub-operands in a random manner to a predetermined number of sub-multipliers, and to output control information indicating the assignment of the sub-operands to the sub-multipliers, wherein
- the sub-multiplying unit has no more sub-multipliers than a predetermined number of sub-multipliers necessary for the sub-multiplication,
- a total number of sub-multipliers is distributed to at least two groups each having at least one sub-multiplier, and the sub-multipliers of each of the groups implement a multiplication method different from the sub-multipliers of the other groups, and wherein
- the sub-multiplying unit has an output unit that receives the control information and is configured to receive outputs from the respective sub-multipliers as a function of the control information and to determine and output the respective sub-product based on the outputs.

7. Electronic circuit having a device according to at least one of claims 1 to 6.

8. Cryptographic device for encrypting or decrypting binary coded information, comprising a device or an electronic circuit according to at least one of claims 1 to 7.

9. Hardware-implemented method for multiplying two-bit sequences, comprising
- randomly selecting and activating exactly one multiplication unit from a plurality of parallel multiplication units for performing the multiplication, wherein
- each of the multiplication units implements a different multiplication method for performing the multiplication and for this purpose has a selection unit configured according to the implemented multiplication method and an accumulation unit configured according to the implemented multiplication method, wherein
- the selection unit of the respectively activated multiplication unit selects, step by step, segments of the bit sequences to be multiplied according to a selection plan adapted to the respective multiplication method, forms operands for a sub-multiplication from the selected segments and outputs said operands to a sub-multiplying unit,
- all multiplication units share exactly one sub-multiplying unit which receives operands formed from one or several segments from the respectively activated multiplication unit, and multiplies said operands with one another, wherein
- the accumulation unit of the activated multiplication unit receives, step by step, the sub-products output from the sub-multiplying unit, accumulates said sub-products according to an accumulation plan matching the selection plan adapted to the implemented multiplication method, and after completion of the accumulation outputs the thus determined product of the bit sequences.

10. Hardware-implemented method for multiplying two-bit sequences, comprising
- selecting segments of the bit sequences to be multiplied and forming the operands for sub-multiplication step by step according to a selection plan,
- receiving and multiplying the formed operands in one step in a sub-multiplying unit to form sub-products,
- receiving and accumulating the sub-products according to an accumulation plan matching the selection plan, and outputting the thus-determined product of the bit sequences after completion of the accumulation, wherein
a) either
- for multiplication of received operands in a sub-multiplying unit, sub-operands with a predetermined number of bits are formed from the operands, and distributed to a predetermined number of sub-multipliers of the sub-multiplying unit, and a respective sub-product determined based on the outputs of the sub-multipliers, wherein
- the sub-multiplying unit has a total number of sub-multipliers which is greater than the predetermined number of sub-multipliers necessary for the determination of the respective sub-product, and the total number of sub-multipliers comprises at least two sub-multiplier groups that, group-wise, implement different multiplication methods, wherein
- the sub-multiplying unit selects the predetermined number of active sub-multipliers from the total number of sub-multipliers, provided that at least one of the sub-multipliers belongs to a different group of sub-multipliers than the other selected sub-multipliers, and distributes the sub-operands only to the randomly selected sub-multipliers,
b) or
- the sub-multiplier unit forms sub-operands with a predetermined number of bits from the operands supplied to it and randomly assigns and outputs the sub-operands to a predetermined number of sub-multipliers, and outputs control information indicating the assignment of the sub-operands to the sub-multipliers, wherein
- the sub-multiplying unit has no more sub-multipliers than a predetermined number of sub-multipliers necessary for the sub-multiplication,
- a total number of sub-multipliers of the sub-multiplying unit is distributed to at least two groups each having at least one sub-multiplier, and the sub-multipliers of each of the groups implement a multiplication method different from the sub-multipliers of the other groups, and wherein
- as a function of the control information, the sub-multiplying unit receives outputs from the sub-multipliers indicated therein, determines and outputs the respective sub-product.

## Revendications

1. Dispositif pour la multiplication de deux séries de bits, comprenant
- une unité de commande qui est conçue pour sélectionner et activer, à partir d'une pluralité d'unités de multiplication parallèles, en fonction d'un signal aléatoire appliqué à l'entrée, exactement une unité de multiplication pour la réalisation de la multiplication,
- une unité de multiplication partielle utilisée en commun par toutes les unités de multiplication, qui est conçue pour recevoir les opérandes générés par l'unité de multiplication activée et de multiplier entre eux les opérandes reçus,
- chacune des unités de multiplication implémentant une méthode de multiplication différente pour la réalisation d'une multiplication et comprenant pour cela une unité de sélection conçue en fonction de la méthode de multiplication implémentée et une unité d'accumulation conçue en fonction de la méthode de multiplication implémentée,
- l'unité de sélection étant conçue pour sélectionner, étape par étape, des segments des séries de bits à multiplier selon un plan de sélection adapté à la méthode de multiplication concernée, pour générer, à partir d'un ou de plusieurs segments, des opérandes et pour les envoyer à l'unité de multiplication partielle et
- l'unité d'accumulation concernée étant conçue pour recevoir, étape, par étape, des produits partiels envoyés par l'unité de multiplication partielle, pour les accumuler selon un plan d'accumulation adapté en fonction de la méthode de multiplication implémentée et adapté au plan de sélection et pour envoyer, à la fin de l'accumulation, le produit ainsi déterminé des séries de bits.

2. Dispositif selon la revendication 1, dans lequel l'unité de multiplication concernée est en outre conçue pour permuter de manière aléatoire une séquence d'étapes de sélection et d'étapes d'accumulation prédéterminées dans le plan de sélection concerné et dans le plan d'accumulation concerné.

3. Dispositif selon l'une des revendications précédentes, dans lequel
- l'unité de multiplication partielle comprend une pluralité de multiplicateurs partiels internes et est conçue pour générer, étape par étape, à partir des opérandes introduits, des opérandes partiels avec un nombre bits déterminé et pour les répartir sur un nombre prédéterminé de multiplicateurs partiels ainsi que pour déterminer, à l'aide des sorties du nombre prédéterminé de multiplicateurs partiels, un produit partiel correspondant,
- l'unité de multiplication partielle comprenant, pour la détermination du produit partiel correspondant, un nombre total de multiplicateurs partiels qui est supérieur au nombre de multiplicateurs partiels nécessaire pour la détermination du produit partiel correspondant et le nombre total de multiplicateurs partiels comprenant au moins deux groupes de multiplicateurs partiels, qui implémentent, par groupes, différentes méthodes de multiplication et
- l'unité de multiplication partielle étant conçue pour sélectionner de manière aléatoire, à partir du nombre total de multiplicateurs partiels, le nombre prédéterminé de multiplicateurs partiels actifs avec pour règle qu'au moins un des multiplicateurs partiels appartient à un autre groupe de multiplicateurs partiels et pour ne répartir les opérandes partiels que sur les multiplicateurs partiels sélectionnés.

4. Dispositif selon la revendication 1 ou 2, dans lequel
- l'unité de multiplication partielle comprend une unité d'entrée qui est conçue pour générer, dans une étape, à partir des opérandes qui lui sont appliqués, des opérandes partiels avec un nombre de bits prédéterminé et pour attribuer et envoyer les opérandes partiels de manière aléatoire à un nombre prédéterminé de multiplicateurs partiels contenus dans l'unité de multiplication partielle ainsi que pour émettre des informations de commande qui montre l'attribution effectuée des opérandes partiels aux multiplicateurs partiels,
- l'unité de multiplication partielle n'ayant pas plus de multiplicateurs partiels que le nombre nécessaire de multiplicateurs partiels nécessaire pour la multiplication partielle,
- un nombre total de multiplicateurs partiels se répartit en au moins deux groupes avec chacun au moins un multiplicateur partiel et les multiplicateurs partiels de chacun des groupes implémentent une méthode de multiplication différente des multiplicateurs partiels des autres groupes et
- l'unité de multiplication partielle comprenant une unité de sortie qui reçoit les informations de commande et qui est conçue pour recevoir, en fonction des informations de commande, des sorties provenant des multiplicateurs partiels correspondants, pour déterminer et pour envoyer le produit partiel correspondant.

5. Dispositif pour la multiplication de deux séries de bits comprenant
- une unité de multiplication partielle qui est conçue pour recevoir des opérandes et pour les multiplier entre eux dans une étape
- une unité de sélection qui est conçue pour sélectionner, selon un plan de sélection, des segments des séries de bits à multiplier, pour générer, à partir d'un ou de plusieurs segments, les opérandes et pour les envoyer à l'unité de multiplication partielle,
- une unité d'accumulation qui est conçue pour recevoir les produits partiels émis par l'unité de multiplication partielle, pour les accumuler selon un plan d'accumulation adapté au plan de sélection et pour envoyer, à la fin de l'accumulation, le produit ainsi déterminé des séries de bits,
- l'unité de sélection et l'unité d'accumulation étant conçues pour permuter de manière aléatoire une séquence d'étapes de sélection et d'étapes d'accumulation prédéterminées dans le plan de sélection correspondant et dans le plan d'accumulation correspondant ; et
- l'unité de multiplication partielle comprenant une pluralité de multiplicateur partiels et étant conçue pour générer, à partir des opérandes introduits dans une étape, des opérandes partiels avec un nombre de bits prédéterminé et pour répartir les opérandes partiels sur un nombre prédéterminé de multiplicateurs partiels actifs à partir de la pluralité de multiplicateurs partiels ainsi que pour déterminer, à l'aide des sorties des multiplicateurs partiels, un produit partiel correspondant, dans lequel
a) soit
- l'unité de multiplication partielle comprend un nombre total de multiplicateur partiels qui est supérieur au nombre prédéterminé de multiplicateurs partiels nécessaire pour la détermination du produit partiel et le nombre total de multiplicateurs partiels comprend au moins deux groupes de multiplicateurs partiels qui implémentent, par groupes, différentes méthodes de multiplication,
- l'unité de multiplication partielle est conçue pour sélectionner le nombre prédéterminé de multiplicateurs partiels actifs de manière aléatoire parmi le nombre total de multiplicateurs partiels avec pour règle qu'au moins un des multiplicateurs partiels appartient à un groupe de multiplicateurs partiels différent des autres multiplicateurs partiels sélectionnés et pour ne répartir les opérandes partiels que sur les multiplicateurs partiels sélectionnés de manière aléatoire,
b) soit
- l'unité de multiplication partielle comprend une unité de réception qui est conçue pour générer, dans une étape, à partir des opérandes qui lui sont appliqués, des opérandes partiels avec un nombre de bits prédéterminé et pour attribuer et envoyer les opérandes partiels, de manière aléatoire, à un nombre prédéterminé de multiplicateurs partiels ainsi que pour émettre des informations de commande qui montrent l'attribution effectuée des opérandes partiels aux multiplicateurs partiels,
- l'unité de multiplication partielle n'a pas plus de multiplicateurs partiels que le nombre nécessaire de multiplicateurs partiels nécessaire pour la multiplication partielle,
- un nombre total de multiplicateurs partiels se répartit en au moins deux groupes avec chacun au moins un multiplicateur partiel et les multiplicateurs partiels de chacun des groupes implémentent une méthode de multiplication différente des multiplicateurs partiels des autres groupes et
- l'unité de multiplication partielle comprenant une unité de sortie qui reçoit les informations de commande et qui est conçue pour recevoir, en fonction des informations de commande, des sorties provenant des multiplicateurs partiels correspondants, pour déterminer et pour envoyer le produit partiel correspondant.

6. Dispositif pour la multiplication de deux séries de bits, comprenant
- une unité de sélection qui est conçue pour sélectionner, étape par étape, des segments des séries de bits à multiplier selon un plan de sélection, pour concevoir, à partir des segments sélectionner, les entrées pour l'unité de multiplication partielle et pour les envoyer à l'unité de multiplication partielle,
- une unité de multiplication partielle qui est conçue pour recevoir les opérandes introduits et pour les multiplier entre eux dans une étape,
- une unité d'accumulation qui est conçue pour recevoir, étape par étape, les produits partiels générés par l'unité de multiplication partielle, pour les accumuler selon un plan d'accumulation adapté au plan de sélection et pour envoyer, après la fin de l'accumulation, le produit ainsi déterminé des séries de bits,
- l'unité de multiplication partielle comprenant une pluralité de multiplicateurs partiels et étant conçue pour générer, à partir des opérandes introduits dans une étape, des opérandes partiels avec un nombre de bits prédéterminé et pour répartir les opérandes partiels sur un nombre prédéterminé de multiplicateurs partiels actifs parmi la pluralité de multiplicateurs partiels ainsi que pour déterminer, à l'aide des sorties des multiplicateurs partiels, un produit partiel correspondant, dans lequel
a) soit
- l'unité de multiplication partielle comprend un nombre total de multiplicateurs partiels qui est supérieur au nombre prédéterminé nécessaire pour la détermination du produit partiel correspondant et le nombre total de multiplicateurs partiels comprend au moins deux groupes de multiplicateurs partiels qui implémentent, par groupes, différentes méthodes de multiplication et
- l'unité de multiplication partielle est conçue pour sélectionner de manière aléatoire le nombre prédéterminé de multiplicateurs partiels actifs parmi le nombre total de multiplicateurs partiels avec pour règle qu'au moins un des multiplicateurs partiels appartient à un groupe de multiplicateurs partiels différent des autres multiplicateurs partiels sélectionnés et pour ne répartir les opérandes partiels que sur les multiplicateurs partiels sélectionnés de manière aléatoire,
b) soit
- l'unité de multiplication partielle comprend une unité d'entrée qui est conçue pour générer, dans une étape, à partir des opérandes introduits, des opérandes partiels avec un nombre de bits prédéterminé et pour attribuer de manière aléatoire les opérandes partiels à un nombre prédéterminé de multiplicateurs partiels et pour envoyer les informations de commande qui montrent l'attribution effectuée des opérandes partiels aux multiplicateurs partiels,
- l'unité de multiplication partielle n'ayant pas plus de multiplicateurs partiels qu'un nombre prédéterminé de multiplicateurs partiels nécessaire pour la multiplication partielle,
- un nombre total de multiplicateurs partiels se répartit sur au moins deux groupes avec chacun au moins un multiplicateur partiel et les multiplicateurs partiels de chacun des groupes implémentent une méthode de multiplication différente des multiplicateurs partiels des autres groupes et
- l'unité de multiplication partielle comprenant une unité de sortie qui reçoit les informations de commande et qui est conçue pour recevoir, en fonction des infirmations de commande, les sorties des multiplicateurs partiels correspondants et pour déterminer et envoyer le produit partiel à l'aide des sorties.

7. Circuit électronique avec un dispositif selon au moins l'une des revendications 1 à 6.

8. Dispositif cryptographique pour le cryptage ou le décryptage d'informations codées de manière binaire, comprenant un dispositif ou un circuit électronique selon au moins l'une des revendications 1 à 7.

9. Procédé, implémenté par un matériel, pour la multiplication de deux séries de bits, comprenant
- la sélection et l'activation aléatoire d'exactement une unité de multiplication parmi une pluralité d'unités de multiplication pour la réalisation de la multiplication,
- chacune des unités de multiplication implémentant une méthode de multiplication différente pour la réalisation de la multiplication et comprenant pour cela une unité de sélection conçue en fonction de la méthode de multiplication implémentée et une unité d'accumulation conçue en fonction de la méthode de multiplication implémentée,
- l'unité de sélection de l'unité de multiplication activée sélectionnant, étape par étape, des segments des séries de bits à multiplier selon un plan de sélection adapté à la méthode de multiplication correspondante, générant, à partir des segments sélectionnés, des opérandes pour une multiplication partielle et les envoyant à une unité de multiplication partielle,
- toutes les unités de multiplication utilisent en commun exactement une unité de multiplication partielle, qui reçoit les opérandes générés par l'unité de multiplication activée à partir d'un ou plusieurs segments et les multiplie entre eux,
- l'unité d'accumulation de l'unité de multiplication activée recevant, étape par étape, les produits partiels générés par l'unité de multiplication partielle, selon un plan d'accumulation adapté à la méthode de multiplication implémentée et adapté au plan de sélection, et émettant, après la fin de l'accumulation, le produit ainsi déterminé des séries de bits.

10. Procédé, implémenté par un matériel, pour la multiplication de deux séries de bits, comprenant
- la sélection de segments des séries de bits à multiplier et génération des opérandes pour une multiplication partielle étape par étape selon un plan de sélection,
- la réception et la multiplication des opérandes générés dans une étape dans une unité de multiplication partielle pour la génération de produits partiels,
- la réception et l'accumulation des produits partiels selon un plan d'accumulation adapté au plan de sélection et émission du produit ainsi déterminé des séries de bits après la fin de l'accumulation, dans lequel
a) soit
- pour la multiplication des opérandes reçus, dans une unité de multiplication partielle, à partir des opérandes, des opérandes partiels avec un nombre prédéterminé de bits sont générés, et sont répartis sur un nombre prédéterminé de multiplicateurs partiels de l'unité de multiplication partielle et un produit partiel correspondant est déterminé à l'aide des sorties des multiplicateurs partiels,
- l'unité de multiplication partielle comprenant un nombre total de multiplicateurs partiels qui est supérieur au nombre prédéterminé de multiplicateurs partiels nécessaire pour la détermination du produit partiel correspondant et le nombre total de multiplicateurs partiels comprenant au moins deux groupes de multiplicateurs partiels qui implémentant, par groupes, différentes méthodes de multiplication,
- l'unité de multiplication partielle sélectionnant de manière aléatoire le nombre prédéterminé de multiplicateurs partiels actifs parmi le nombre total de multiplicateurs partiels avec pour règle qu'au moins un des multiplicateurs partiels appartient à un groupe de multiplicateurs partiels différent des autres multiplicateurs partiels sélectionnés et ne répartissant les opérandes partiels que sur les multiplicateurs partiels sélectionnés de manière aléatoire,
b) soit
- l'unité de multiplication partielle génère, à partir des opérandes introduits, des opérandes partiels avec un nombre de bits prédéterminé et attribue et fournit en sortie les opérandes partiels de manière aléatoire à un nombre prédéterminé de multiplicateurs partiels et émet des informations de commande qui montrent l'attribution effectuée des opérandes partiels aux multiplicateurs partiels,
- l'unité de multiplication partielle n'a pas plus de multiplicateurs partiels qu'un nombre prédéterminé de multiplicateurs partiels nécessaire pour la multiplication partielle,
- un nombre total de multiplicateurs partiels de l'unité de multiplication partielle se répartit sur au moins deux groupes avec chacun au moins un multiplicateur partiel et les multiplicateurs partiels de chacun des groupes implémentent une méthode de multiplication différente des multiplicateurs partiels des autres groupes et
- l'unité de multiplication partielle recevant, en fonction des informations de commande, les sorties des multiplicateurs partiels qui y sont affichés, détermine et fournit en sortie le produit partiel correspondant.
